# EUROPEAN PATENT APPLICATION

(11) **EP 4 386 905 A1**
(43) Date of publication of application: **19.06.2024**
(21) Application number: 22934336.3
(22) Date of filing: 01.04.2022
(51) Int. Cl.: H01M 4/505, H01M 4/525, H01M 4/36

(54) **POSITIVE ELECTRODE ACTIVE MATERIAL AND PREPARATION METHOD THEREFOR, POSITIVE ELECTRODE PLATE COMPRISING SAME, SECONDARY BATTERY AND ELECTRIC DEVICE**

(71) Applicant: Contemporary Amperex Technology Co., Limited, Ningde City, Fujian 352100 (CN)
(72) Inventor: MA, Qingyan, Ningde City, Fujian 352100 (CN); WEN, Yan, Ningde City, Fujian 352100 (CN); ZHAO, Yuzhen, Ningde City, Fujian 352100 (CN); GUAN, Yingjie, Ningde City, Fujian 352100 (CN); HUANG, Qisen, Ningde City, Fujian 352100 (CN)
(74) Representative: Gong, Jinping
(86) International application number: PCT/CN2022/084877
(87) International publication number: WO 2023/184504

(57) **Abstract**

The present application provides a positive electrode active material, a method for the preparation thereof and a positive electrode plate, a secondary battery and an electrical device containing the same. The positive electrode active material has a core-shell structure, including a core and a shell cladding the core, wherein the core includes Li₁₊ₓMn_{1-y}A_{y}P_{1-z}R_{z}O₄, the shell includes a first cladding layer cladding the core, a second cladding layer cladding the first cladding layer and a third cladding layer cladding the second cladding layer. The positive electrode active material of the present application enables the secondary battery to have a relatively high energy density, and good rate performance, cycling performance and safety performance.

## Description

### TECHNICAL FIELD

The present application belongs to the technical field of batteries, in particular to a positive electrode active material, a method for the preparation thereof and a positive electrode plate, a secondary battery and an electrical device containing the same.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, their safety performances are receiving more and more attention. Lithium manganese phosphate has become one of the most popular positive electrode active materials due to its high capacity, good safety performance and abundant raw material sources. However, lithium manganese phosphate is prone to leaching-out of manganese ions during charging, resulting in rapid capacity decay. Therefore, it is necessary to provide a positive electrode active material with good overall performance.

### SUMMARY

An object of the present application is to provide a positive electrode active material, a method for the preparation thereof, and a positive electrode plate, a secondary battery and an electrical device comprising the same, which material enables the secondary battery using the positive electrode active material to have a relatively high energy density, and good rate performance, cycling performance and safety performance.

A first aspect of the present application provides a positive electrode active material having a core-shell structure, comprising a core and a shell cladding the core, wherein the core comprises Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S;
the shell comprises a first cladding layer cladding the core, a second cladding layer cladding the first cladding layer and a third cladding layer cladding the second cladding layer, wherein the first cladding layer comprises pyrophosphate MP₂O₇ and phosphate XPO₄; wherein M and X are each independently selected from one or more of Li, Fe, Ni, Mg, Co, Cu, Zn, Ti, Ag, Zr, Nb and Al; the second cladding layer comprises carbon; and the third cladding layer comprises a polymer comprising one or more of plant polysaccharides, marine polysaccharides, and the derivatives thereof.

In the present application, the doping with specific element and surface cladding of lithium manganese phosphate can effectively inhibit leaching-out of manganese ions in the process of de-intercalation of lithium, and promote the migration of lithium ions, thereby improving the rate performance, cycling performance and safety performance of the secondary battery.

In some embodiments of the present application, the substituent attached to the sugar unit in the polymer comprises at least one of the group selected from the following functional groups: -OH, -COOH and the salts thereof, -R-OH, -SO₃H and the salts thereof, -R-OH, -R-SO₃H and the salts thereof, sulphate group, alkoxy group, and R represents alkylene, optionally, C1-C5 alkylene.

Optionally, the substituent attached to the sugar unit in the polymer comprises at least one of the group selected from the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, methoxy, and ethoxy.

In some embodiments of the present application, the plant polysaccharide comprises one or more selected from pectin, carboxymethyl starch, hydroxypropyl starch, dextrin, cellulose ether, carboxymethyl chitosan, hydroxyethyl cellulose, carboxymethyl cellulose, carboxypropylmethyl cellulose, guar gum, sesbania gum, gum arabic, and the modified polymers thereof.

In some embodiments of the present application, the marine polysaccharide comprises one or more selected from lithium alginate, sodium alginate, potassium alginate, fucoidan, agar, carrageenan, carrageenin, xanthan gum, fenugreek gum and the modified polymers thereof.

In some embodiments of the present application, the polymer has a number average molecular weight of 10,000 to 200,000, optionally of 18,000 to 120,000. The number average molecular weight of the polymer within a suitable range allows the positive electrode active material to have both good dynamic performance and high-temperature stability.

In some embodiments of the present application, the substituent attached to the sugar unit is present in a mass percentage α in the polymer, with α being from 20% to 85%, optionally from 30% to 78%. The mass percentage of the substituent attached to the sugar unit in the polymer within a suitable range allows a better cladding modification effect on the core.

In some embodiments of the present application, the first cladding layer has a cladding amount of greater than 0 and less than or equal to 7 wt%, optionally 4 wt% to 5.6 wt%, based on the weight of the core. When the cladding amount of the first cladding layer is within the above range, the first cladding layer can effectively exert its function without affecting the dynamic performance of the secondary battery due to the too thick cladding layer.

In some embodiments of the present application, the second cladding layer has a cladding amount of greater than 0 and less than or equal to 6 wt%, optionally 3 wt% to 5 wt%, based on the weight of the core. As a result, the existence of the second cladding layer can avoid the direct contact between the positive electrode active material and the electrolytic solution, reduce the erosion of the positive electrode active material by the electrolytic solution, and improve the conductive ability of the positive electrode active material. When the cladding amount of the second layer is within the above range, the specific capacity of the positive electrode active material can be effectively increased.

In some embodiments of the present application, the third cladding layer has a cladding amount of 0.05 wt% to 10 wt%, more optionally 0.1 wt% to 5 wt%, based on the weight of the core. When the cladding amount of the third cladding layer is in a suitable range, the cladding modification effect on the core is better.

In some embodiments of the present application, the third cladding layer is located at 40% to 90%, optionally 60% to 80% of the surface of the second cladding layer. When the cladding ratio of the third cladding layer on the surface of the second cladding layer is in a suitable range, the cladding modification effect on the core and other cladding layers is better, so that the cycling performance and/or high-temperature stability of the secondary battery can be further improved.

In some embodiments of the present application, in the core, the ratio of y:(1-y) is 1:10 to 10:1, optionally 1:4 to 1:1. As a result, it is beneficial to improving the energy density and cycling performance of the secondary battery.

In some embodiments of the present application, in the core, the ratio of z:(1-z) is 1:9 to 1:999, optionally 1:499 to 1:249. As a result, it is beneficial to improving the energy density and cycling performance of the secondary battery.

In some embodiments of the present application, A is selected from at least two of Fe, Ti, V, Ni, Co and Mg. as a result, when A is selected from two or more metals within the above scope, the doping at Mn site is beneficial to enhance the doping effect, further reduce the surface oxygen activity and inhibit the leaching-out of manganese ions.

In some embodiments of the present application, the phosphate in the first cladding layer has an interplanar spacing ranging from 0.345 nm to 0.358 nm, and a crystal orientation (111) angle ranging from 24.25° to 26.45°. As a result, it is beneficial to improving the cycling performance and rate performance of the secondary battery.

In some embodiments of the present application, the pyrophosphate in the first cladding layer has an interplanar spacing ranging from 0.293 nm to 0.326 nm, and a crystal orientation (111) angle ranging from 26.41° to 32.57°. As a result, it is beneficial to further improving the cycling performance and rate performance of the secondary battery.

In some embodiments of the present application, a weight ratio of pyrophosphate to phosphate in the first cladding layer is 1:3 to 3:1, optionally 1:3 to 1:1. As a result, when the a weight ratio of pyrophosphate to phosphate is within a suitable range, it not only can effectively prevent the leaching-out of manganese ions, but also can effectively reduce the surface lithium content, and reduce the interface side reactions, thereby improving the rate performance, cycling performance and safety performance of the secondary battery.

In some embodiments of the present application, crystallinities of pyrophosphate and phosphate are each independently ranging from 10% to 100%, optionally from 50% to 100%. As a result, when crystallinities of pyrophosphate and phosphate are within the above range, it is beneficial to fully playing the role of pyrophosphate in hindering the leaching-out of manganese ions and phosphate in reducing the surface lithium content and reducing the interface side reactions.

In some embodiments of the present application, the positive electrode active material has a Li/Mn anti-site defect concentration of 4% or less, optionally 2% or less. As a result, it is beneficial to improving the specific capacity and rate performance of the positive electrode active material.

In some embodiments of the present application, the positive electrode active material has a lattice change rate of 6% or less, optionally 4% or less. As a result, it is beneficial to improving the rate performance of the secondary battery.

In some embodiments of the present application, the positive electrode active material has a surface oxygen valence of -1.88 or less, optionally -1.98 to -1.88. As a result, it is beneficial to improving the cycling performance and high-temperature storage performance of the secondary battery.

In some embodiments of the present application, the positive electrode active material has a compaction density of 2.0 g/cm³ or more, optionally 2.2 g/cm³ or more, at 3 Tons. As a result, it is beneficial to improving the volumetric energy density of the secondary battery.

A second aspect of the present application provides a method for preparing a positive electrode active material, comprising the following steps:
step of providing a core material comprising Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S;
step of cladding: providing MP₂O₇ power and XPO₄ suspension containing a carbon source, adding the core material and MP₂O₇ power to the suspension containing a carbon source and mixing them, obtaining a core having a first cladding layer and a second cladding layer by sintering, mixing the obtained core having a first cladding layer and a second cladding layer with a polymer solution evenly, and obtaining the positive electrode active material by drying, wherein M and X are each independently selected from one or more of Li, Fe, Ni, Mg, Co, Cu, Zn, Ti, Ag, Zr, Nb and Al; the polymer comprises one or more of plant polysaccharides, marine polysaccharides, and the derivatives thereof;
wherein, the positive electrode active material has a core-shell structure comprising the core and a shell cladding the core, wherein the shell comprises a first cladding layer cladding the core, a second cladding layer cladding the first cladding layer and a third cladding layer cladding the second cladding layer, wherein the first cladding layer comprises pyrophosphate MP₂O₇ and phosphate XPO₄, the second cladding layer comprises carbon, and the third cladding layer comprises a polymer comprising one or more of plant polysaccharides, marine polysaccharides, and the derivatives thereof.

In some embodiments of the present application, the step of providing a core material comprises:
step (1): mixing a manganese source, a source of element A and an acid in a solvent and stirring to obtain particles of a manganese salt doped with element A; and
step (2):, mixing the particles of a manganese salt doped with element A, a lithium source, a phosphorus source, and a source of element R in a solvent to obtain a slurry, sintering under the protection of an inert gas atmosphere to obtain lithium manganese phosphate doped with elements A and R, wherein the lithium manganese phosphate doped with elements A and R has a chemical formula of Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S.

In some embodiments of the present application, the step (1) is carried out at a temperature in a range of 20-120°C, optionally 25-80°C.

In some embodiments of the present application, the stirring in the step (1) is carried out at 500-700 rpm for 60-420 minutes, optionally 120-360 minutes.

As a result, by controlling the reaction temperature, stirring rate and mixing time during doping, the doping elements can be evenly distributed, and the material after sintering has a higher crystallinity, so as to improve the specific capacity and rate performance of the positive electrode active material.

In some embodiments of the present application, the source of element A is selected from one or more of elemental substance, sulfates, halides, nitrates, salts of organic acid, oxides or hydroxides of element A.

In some embodiments of the present application, the source of element R is selected from one or more of elemental substance, sulfates, halides, nitrates, salts of organic acid, oxides or hydroxides, and inorganic acids of element R.

As a result, by selecting the source of each doping element in the above range, the performance of the positive electrode active material can be effectively improved.

In some embodiments of the present application, the MP₂O₇ power is prepared by steps of: adding a source of element M and a phosphorus source to a solvent to obtain a mixture, adjusting pH of the mixture to be 4 to 6, stirring and fully reacting, and drying and sintering, to obtain MP₂O₇ power, wherein M is elected from one or more of Li, Fe, Ni, Mg, Co, Cu, Zn, Ti, Ag, Zr, Nb and Al.

In some embodiments of the present application, in the preparation of MP₂O₇ powder, the drying step is carried out at 100-300 °C, optionally 150-200 °C for 4-8 hours.

In some embodiments of the present application, in the preparation of MP₂O₇ powder, the sintering step is carried out at 500-800 °C, optionally 650-800 °C under an inert gas atmosphere for 4-10 hours.

In some embodiments of the present application, the sintering temperature for obtaining the core with the first and second cladding layers in the cladding step is 500-800 °C and the sintering time is 4-10 hours. As a result, by controlling the sintering temperature and time in the cladding step, the specific capacity and rate performance of the positive electrode active material can be further improved.

A third aspect of the present application provides a positive electrode plate comprising a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application, and the positive electrode active material is present in the positive electrode film layer in a content of 10 wt% or more, based on total weight of the positive electrode film layer.

In some embodiments of the present application, the positive electrode active material is present in the positive electrode film layer in a content of 90 wt% to 99.5 wt%, based on total weight of the positive electrode film layer. The content of the positive electrode active material within the above range is beneficial to giving full play to advantages of positive electrode active material of the present application.

A fourth aspect of the present application provides a secondary battery comprising the positive electrode active material of the first aspect of the present application, or the positive electrode active material prepared by the method of the second aspect of the present application, or the positive electrode plate of the third aspect of the present application.

A fifth aspect of the present application provides an electrical device comprising the secondary battery of the fourth aspect of the present application.

The positive electrode plate, the secondary battery, and the electrical device of the present application comprise the positive electrode active material of the present application, and thus have at least the same advantages as the positive electrode active material.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of a secondary battery according to an embodiment of the present application shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power source.
Fig. 7 is a diagram showing comparison between the XRD pattern of the positive electrode active material core prepared in Example 1-1 and the XRD standard pattern of lithium manganese phosphate (00-033-0804).

In the drawings, the accompanying drawings are not necessarily drawn to an actual scale. Among them, the reference sings in the drawings are illustrated as follows: 1 - battery pack, 2 - upper case body, 3 - lower case body, 4 - battery module, 5 - secondary battery, 51 - housing, 52 - electrode assembly, and 53- cover plate.

### DETAILED DESCRIPTION

Hereinafter, embodiments of the positive electrode active material, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

It should be noted that, as used herein, the term "median particle size Dv50" is a particle size at which a cumulative volume distribution percentage of a material reaches to 50%. In the present application, the median particle size Dv50 of a material may be determined using a laser diffraction particle size analysis. For example, with reference to standard GB/T 19077-2016, it is determined using a laser particle size analyzer (e.g., Malvern Master Size 3000).

As used herein, the term "cladding layer" refers to a layer of material cladding a core, and the layer of material may completely or partially clad the core. Use of the term "cladding layer" is used only for convenience of description and is not intended to limit the present invention. Additionally, each cladding layer may fully or partially clad the core or underlying layer.

The term "sugar unit" refers to a single monosaccharide attached to one or more other monosaccharide units, which sometimes refer to sugar residues. The term "polysaccharide" refers to a macromolecule consisting of a large number of sugar units linked to each other by glycosidic bonds; when all the sugar units in a polysaccharide are of the same type, the polysaccharide is referred to as a homopolysaccharide or homopolymerized sugar, and when more than one type of sugar unit is present they are referred to as heteropolysaccharides or heteropolysaccharides.

As used herein, the term "source" refers to a compound that is a source of an element, as an example, the "source" includes but not limited to carbonates, sulfates, nitrates, elemental substance, halides, oxides and hydroxides and the like.

The inventors of the present application found in the actual operation that the leaching-out of manganese ions is serious during the deep charging and discharging of the lithium manganese phosphate positive electrode active material. Although the prior art have attempted to clad lithium manganese phosphate with lithium iron phosphate to reduce interfacial side reactions, such cladding cannot prevent the migration of the leached manganese ions into the electrolytic solution. The leaching-out of manganese ions are reduced to manganese metal after migration to the negative electrode. The produced metal manganese is equivalent to a "catalyst", which can catalyze the decomposition of the SEI (solid electrolyte interphase) film on the surface of the negative electrode to produce a by-product. A part of the by-product is gas, which is prone to cause the battery to expand and affect the safety performance of the battery, and another part is deposited on the surface of the negative electrode, and blocks the channel of lithium ion in and out of the negative electrode, resulting in increased impedance of the battery and affecting the dynamic performance of the battery. In addition, in order to supplement the decomposed SEI film, the active lithium ions in the battery and the electrolytic solution are continuously consumed, which also has an irreversible impact on the capacity retention rate of the battery.

The inventors have found, for lithium manganese phosphate positive electrode active material, problems such as serious leaching-out of manganese ion and higher surface reactivity may be caused by Jahn-Teller effect of Mn³⁺ and change of Li⁺ channel size after de-intercalation of lithium. To this end, by modifying lithium manganese phosphate, the inventor obtains a positive electrode active material that can significantly reduce the leaching-out of manganese ions and reduce the lattice change rate, and thus have good rate performance, cycling performance and safety performance.

### Positive electrode active material

A first aspect of the present application provides a positive electrode active material having a core-shell structure, comprising a core and a shell cladding the core.

The core comprises Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S.

The shell comprises a first cladding layer cladding the core, a second cladding layer cladding the first cladding layer and a third cladding layer cladding the second cladding layer; wherein the first cladding layer comprises pyrophosphate MP₂O₇ and phosphate XPO₄; wherein M and X are each independently selected from one or more of Li, Fe, Ni, Mg, Co, Cu, Zn, Ti, Ag, Zr, Nb and Al; the second cladding layer comprises carbon; and the third cladding layer comprises a polymer comprising one or more of plant polysaccharides, marine polysaccharides, and the derivatives thereof.

Unless otherwise stated, in the above chemical formula, when A represents more than two elements, the above range for the y value is not only for the stoichiometric number of each element as A, but also for the sum of the stoichiometric numbers of each element as A. For example, when A represents more than two elements A1, A2 ...... and An, each of the respective stoichiometric numbers x1, x2 ......and xn of respective A1, A2 ......and An must fall within the numerical range defined by the present application for x, and the sum of y1, y2...... and yn must also fall within such numerical range of the present application. Similarly, in the case where R is more than two elements, the limitations on numerical ranges for the stoichiometric numbers of R in the present application also have the above meaning.

The lithium manganese phosphate positive electrode active material of the present application is a core-shell structure with three cladding layers, wherein the core comprises Li₁₊ₓMn_{1-y}A_{y}P_{1-z}R_{z}O₄. The doping element A at the manganese site of the lithium manganese phosphate helps to reduce the lattice change rate of the lithium manganese phosphate in the process of de-intercalation of lithium, improve the structural stability of lithium manganese phosphate positive electrode active material, greatly reduce the leaching-out of manganese ions and reduce the oxygen activity on the surface of particles. The doping element R at the phosphorus site helps to change the difficulty of change rate of Mn-O bond length, thereby reducing the migration barrier of the lithium ion, promoting the migration of the lithium ion, and improving the rate performance of the secondary battery.

The first cladding layer of the positive electrode active material of the present application includes pyrophosphate and phosphate. Due to the high migration barrier of transition metals in pyrophosphate (> 1 eV), the leaching-out of transition metal ions could be inhibited effectively. Phosphate has excellent conductivity of lithium ions, and can reduce the surface lithium content.

The second cladding layer of the positive electrode active material of the present application is a carbon-containing layer, which can effectively improve the conductivity and the desolvation ability of LiMnPO₄. In addition, the "barrier" effect of the second cladding layer can further hinder the migration of manganese ions into the electrolytic solution and reduce the erosion of the positive electrode active material by the electrolytic solution.

The third cladding layer of the positive electrode active material of the present application polysaccharides and derivatives thereof, which can bind with Lewis acids such as PF₅ in the electrolytic solution to reduce the generation of HF, thereby alleviating the erosion of the surface of the positive electrode active material by the acid in the electrolytic solution; Polysaccharides and derivatives thereof contain a large amount of ether bonds (-O-) in the molecular structure, which can complex manganese ions, thereby reducing the leaching-out of manganese ions; in addition, the third cladding layer can also play a role in isolating the electrolytic solution from the core material. In the present application, polysaccharide derivatives include, but are not limited to, acidified (sulfated, sulfonated, phosphorylated), acetylated polysaccharides.

As a result, by specific element doping and surface cladding of lithium manganese phosphate, the present application can effectively inhibit the leaching-out of manganese ions in the process of de-intercalation of lithium, and promote the migration of lithium ions, thereby improving the rate performance, cycling performance and safety performance of the secondary battery.

It should be noted that, the core of the positive electrode active material of the present application has basically same primary characteristic peaks at position to undoped LiMnPO₄, indicating that the core of the doped lithium manganese phosphate positive electrode active material has no impurity phase and the improvement of secondary battery performances is mainly caused by doping of elements rather than by an impurity phase.

In some embodiments, optionally, the first cladding layer has a cladding amount of greater than 0 and less than or equal to 7 wt%, optionally 4 wt% to 5.6 wt%, based on the weight of the core.

When the cladding amount of the first cladding layer is within the above range, it can further inhibit the leaching-out of manganese ions, and further promote the lithium ion transport. The following conditions may be effectively avoided: if the cladding amount of the first cladding layer is too small, it may lead to the insufficient inhibition effect of pyrophosphate on the leaching-out of manganese ions, and the improvement of lithium ion transport performance is not significant. If the cladding amount of the first cladding layer is too large, it may render the cladding layer too thick, increase the battery impedance, and affect the dynamic performance of the secondary battery.

In some embodiments, optionally, the second cladding layer has a cladding amount of greater than 0 and less than or equal to 6 wt%, optionally 3 wt% to 5 wt%, based on the weight of the core.

On the one hand, the carbon-containing layer as the second cladding layer can play a "barrier" function to avoid direct contact between the positive electrode active material and the electrolytic solution, thereby reducing the erosion of the positive electrode active material by the electrolytic solution, improving the safety performance of the secondary battery at high temperature. On the other hand, it has a strong electrical conductivity, which can reduce the internal resistance of the battery, thereby improving the dynamic performance of the secondary battery. However, due to the low specific capacity of carbon materials, entire specific capacity of the positive electrode active material may be reduced when the amount of the second layer is too large. As a result, the amount of the second cladding layer within the above range improves the dynamic performance and safety performance of the secondary battery without sacrificing the specific capacity of the positive electrode active material.

In some embodiments, optionally, the third cladding layer has a cladding amount of greater than 0 wt% to 10 wt%, optionally 0.05 wt% to 10 wt%, more optionally 0.1 wt% to 5 wt%, based on the weight of the core.

The cladding amount of the third cladding layer is within a suitable range allows a better cladding modification effect on the core. The following conditions may be effectively avoided: if the cladding amount of the third layer is too low, the cladding modification effect on the core may be not significant, and the effects of alleviating the erosion of the surface of the positive electrode active material by the acid in the electrolytic solution and reducing the leaching-out of manganese ions are not significant; and if the cladding amount of third cladding layer is too high, the electronic conductivity and ionic conductivity of the positive electrode active material may become poor and the impedance of the battery may increase, thereby affecting the dynamic performance and cycling performance of the secondary battery.

In the core, x is -0.100 to 0.100, for example, x may be 0.006, 0.004, 0.003, 0.002, 0.001, 0, -0.001, -0.003, -0.004, -0.005, -0.006, -0.007, -0.008, -0.009, or -0.100.

In the core, y is 0.001 to 0.500, for example, y may be 0.1, 0.2, 0.25, 0.3, 0.35, 0.4, or 0.45.

In the core, z is 0.001 to 0.100, for example z may be 0.001, 0.002, 0.003, 0.004, 0.005, 0.006, 0.007, 0.008, 0.009, or 0.100.

In some embodiments, optionally, in the core, the ratio of y:(1-y) is 1:10 to 10:1, optionally 1:4 to 1:1. Here y denotes the sum of the stoichiometric numbers of the Mn-site doping element. The energy density and cycling performance of the secondary battery can be further improved when the above conditions are satisfied.

In some embodiments, optionally, in the core, the ratio of z:(1-z) is 1:9 to 1:999, optionally 1:499 to 1:249. Here z denotes the sum of the stoichiometric numbers of the P-site doping element. The energy density and cycling performance of the secondary battery can be further improved when the above conditions are satisfied.

In some embodiments, optionally, A is selected from at least two of Fe, Ti, V, Ni, Co and Mg.

The simultaneous doping of two or more of the above elements at the manganese site in the lithium manganese phosphate positive electrode active material is beneficial to enhance the doping effect, on the one hand, it further reduces the lattice change rate, thereby inhibiting the leaching-out of manganese ions and reducing the consumptions of electrolytic solution and active lithium ions; on the other hand, it is also beneficial to further reduce the surface oxygen activity and reduce the interface side reaction between the positive electrode active material and the electrolytic solution, thereby improving the cycling performance and high-temperature storage performance of the secondary battery.

In some embodiments, optionally, the phosphate in the first cladding layer has an interplanar spacing ranging from 0.345 nm to 0.358 nm, and a crystal orientation (111) angle ranging from 24.25° to 26.45°.

In some embodiments, optionally, the pyrophosphate in the first cladding layer has an interplanar spacing ranging from 0.293 nm to 0.326 nm, and a crystal orientation (111) angle ranging from 26.41° to 32.57°.

When the phosphate and pyrophosphate in the first cladding layer have the interplanar spacing and crystal orientation (111) angle within the above range, it can effectively avoid the impurity phase in the cladding layer, thereby promoting specific capacity, cycling performance and rate performance of the positive electrode active material.

In some embodiments, a weight ratio of pyrophosphate to phosphate in the first cladding layer is 1:3 to 3:1, optionally 1:3 to 1:1.

The suitable ratio of pyrophosphate to phosphate is conducive to giving full play to the synergistic effect, not only can effectively prevent the leaching-out of manganese ions, but also can effectively reduce the surface lithium content, and reduce the interface side reactions, thereby improving the rate performance, cycling performance and safety performance of the secondary battery. The following conditions may be effectively avoided: if there is too much pyrophosphate and too little phosphate, it may lead to increased battery impedance; and if there is too much phosphate and too little pyrophosphate, the effect of inhibiting the leaching-out of manganese ions is not significant.

In some embodiments, crystallinities of pyrophosphate and phosphate are each independently ranging from 10% to 100%, optionally from 50% to 100%.

In the first cladding layer of the lithium manganese phosphate positive electrode active material of the present application, pyrophosphate and phosphate with a certain degree of crystallinity are conducive to maintaining the structural stability of the first cladding layer and reducing lattice defects. On the one hand, it is beneficial to fully playing the role of pyrophosphate in hindering the leaching-out of manganese ions; on the other hand, it is also beneficial to fully play the role of phosphate in reducing the surface lithium content and reducing the surface oxygen valence, thereby reducing the interface side reaction between the positive electrode active material and the electrolytic solution, reducing the consumption of the electrolytic solution, and improving the cycling performance and safety performance of secondary battery.

It should be noted that in this application, the crystallinity of pyrophosphate and phosphate can be adjusted, for example, by adjusting the process conditions of the sintering process, such as sintering temperature, sintering time, etc. The crystallinities of pyrophosphate and phosphate can be tested by conventional technical means in the field, for example by X-ray diffraction method, density method, infrared spectroscopy, differential scanning calorimetry, and nuclear magnetic resonance absorption method.

In some embodiments, the substituent attached to the sugar unit in the polymer of the third cladding layer comprises at least one of the group selected from the following functional groups: -OH, -COOH and the salts thereof, -R-OH, -SO₃H and the salts thereof, -R-OH, -R-SO₃H and the salts thereof, sulphate group, alkoxy group, and R represents alkylene, optionally, C1-C5 alkylene. As used herein, term "substituent attached to the sugar unit" comprises all groups attached to the sugar unit skeleton.

Optionally, the substituent attached to the sugar unit in the polymer comprises at least one of the group selected from the following functional groups: -OH, -COOH, -COOLi, -COONa, -COOK, -SO₃H, -SO₃Li, -SO₃Na, -SO₃K, -CH₂-SO₃H, -CH₂-SO₃Li, -CH₂-SO₃Na, -CH₂-SO₃K, methoxy, and ethoxy.

As an example, the plant polysaccharide comprises one or more selected from pectin, carboxymethyl starch, hydroxypropyl starch, dextrin, cellulose ether, carboxymethyl chitosan, hydroxyethyl cellulose, carboxymethyl cellulose, carboxypropylmethyl cellulose, guar gum, sesbania gum, gum arabic, and the modified polymers thereof.

As an example, the marine polysaccharide comprises one or more selected from lithium alginate, sodium alginate, potassium alginate, fucoidan, agar, carrageenan, carrageenin, xanthan gum, fenugreek gum and the modified polymers thereof.

In some embodiments, the polymer has a number average molecular weight of 10,000 to 200,000, optionally of 18,000 to 120,000. The number average molecular weight of the polymer may be determined by methods known in the art, such as by gel permeation chromatography (GPC). A PL-GPC 220 high temperature gel permeation chromatograph may be used for testing.

When the number average molecular weight of the polymer is within the suitable ranges, it is also possible to combine good dynamic performance and high-temperature stability of the positive electrode active material. In addition, the following conditions may be effectively avoided: if the number average molecular weight of the polymer is too small, the film formation effect on the surface of core may be poor, and the cladding modification effect on the core may not be observed, and effects of alleviating the erosion of the surface of the positive electrode active material by the acid in the electrolytic solution and reducing the leaching-out of manganese ions are not significant; and if the number average molecular weight of the polymer is too high, the force between polymers may be too strong, and the positive electrode active material may be easily agglomerated, which may reduce dynamic performance of the positive electrode active material, and may also lead to poor cladding modification effect, for example, the cladding layer tends to be uneven in thickness.

In some embodiments, the substituent attached to the sugar unit is present in a mass percentage α in the polymer, with α being from 20% to 85%, optionally from 30% to 78%. The mass percentage of the substituent attached to the sugar unit in the polymer may be determined by methods known in the art, such as by titration (e.g. acid-base titration, redox titration, precipitation titration), infrared spectroscopy, nuclear magnetic resonance spectroscopy.

The mass percentage of the substituent attached to the sugar unit in the polymer within in the suitable ranges allows better cladding modification effect on the core. In addition, the following conditions may be effectively avoided: if the mass percentage of the substituent attached to the sugar unit in the polymer is too high, the force between the polymers may be too strong, and the positive electrode active material may be easily agglomerated, which may reduce dynamic performance and cycling performance of the positive electrode active material; if the mass percentage of the substituent attached to the sugar unit in the polymer is too low, effects of alleviating the erosion of the surface of the positive electrode active material by the acid in the electrolytic solution and reducing the leaching-out of manganese ions are not significant.

In some embodiments, the third cladding layer is located at 40% to 90%, optionally 60% to 80% of the surface of the second cladding layer. When the cladding ratio of the third cladding layer on the surface of the second cladding layer is within a suitable range, the cladding modification effect on the core and other cladding layers is better, so that the cycling performance and/or high-temperature stability of the secondary battery can be further improved. The following conditions may be effectively avoided: if the cladding ratio of the third cladding layer on the surface of the second cladding layer is too high, the electronic conductivity and ionic conductivity of the positive electrode active material may become poor and the impedance of the battery may increase, thereby affecting the dynamic performance and cycling performance of the secondary battery; and if the cladding ratio of the third cladding layer on the surface of the second cladding layer is too low, the cladding modification effect on the core and the second cladding layer may be not significant, and the effects of alleviating the erosion of the surface of the positive electrode active material by the acid in the electrolytic solution and reducing the leaching-out of manganese ions are not significant.

In some embodiments, optionally, the positive electrode active material has a Li/Mn anti-site defect concentration of 4% or less, optionally 2% or less.

The term Li/Mn anti-site defect refers to interchange of Li⁺ with Mn²⁺ in terms of its site in the LiMnPO₄ lattice. The Li/Mn anti-site defect concentration refers to a percentage of Li⁺ interchanged with Mn²⁺ relative to the total amount of Li⁺ in the positive electrode active material. Li⁺ transport channel is a one-dimensional channel, Mn²⁺ will be difficult to migrate in the Li⁺ channel, and thus anti-site defect Li⁺ hinders the Li⁺ transport. In the positive electrode active material of the present application, by controlling the Li/Mn anti-site defect concentration at a low level, the specific capacity and rate performance of the positive electrode active material may be improved. The anti-site defect concentration in the present application may, for example, be tested according to JIS K 0131-1996.

In some embodiments, optionally, the positive electrode active material has a lattice change rate of 6% or less, optionally 4% or less.

The de-intercalation of lithium in LiMnPO₄ is a two-phase reaction. The interfacial stress of the two phases is determined by the level of the lattice change rate before and after the de-intercalation of lithium, and the smaller the lattice change rate is, the smaller the interfacial stress is, and the easier the Li⁺ transport is. Therefore, reducing the lattice change rate of the core will be favorable to enhance the Li⁺ transport ability, thereby improving the rate performance of the secondary battery.

In some embodiments, optionally, the button battery of the positive electrode active material has an average discharge voltage of 3.5V or more, and the discharge specific capacity of 140mAh/g or more, optionally the average discharge voltage of 3.6V or more, and the discharge specific capacity of 145mAh/g or more.

Although the undoped LiMnPO₄ has an average discharge voltage of 4.0V or higher, it has a low discharge specific capacity, usually less than 120mAh/g, and thus, the secondary battery has a low energy density. By adjusting the lattice change rate by doping, the discharge specific capacity can be greatly increased, and the entire energy density of the secondary battery can be significantly increased under the condition of a slight drop in the average discharge voltage.

In some embodiments, the positive electrode active material has a surface oxygen valence of -1.88 or less, optionally -1.98 to -1.88.

This is due to the fact that the higher the valence of oxygen in the compound, the stronger the ability of gaining electrons, i.e., the stronger the oxidizability. In the lithium manganese phosphate positive electrode active material of the present application, controlling the surface oxygen valence at a low level may reduce the surface reactive activity of the positive electrode active material, and reduce the interface side reaction between the positive electrode active material and the electrolytic solution, thereby improving the cycling performance and high-temperature storage performance of the secondary battery.

In some embodiments, the positive electrode active material has a compaction density of 2.0 g/cm³ or more, optionally 2.2 g/cm³ or more, at 3 Tons.

The higher the compaction density is, the greater the weight of the positive electrode active material per unit volume is, which is conducive to improving volumetric energy density of the secondary battery. In the present application, compaction density may, for example, be measured according to GB/T 24533-2009.

### Preparation method

A second aspect of the present application provides a method for preparing the positive electrode active material in the first aspect of the present application, comprising the following steps:
step of providing a core material comprising Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S;
step of cladding: providing MP₂O₇ power and XPO₄ suspension containing a carbon source, adding the core material and MP₂O₇ power to the suspension containing a carbon source and mixing them, obtaining a core having a first cladding layer and a second cladding layer by sintering, mixing the obtained core having a first cladding layer and a second cladding layer with a polymer solution evenly, and obtaining the positive electrode active material by drying, wherein M and X are each independently selected from one or more of Li, Fe, Ni, Mg, Co, Cu, Zn, Ti, Ag, Zr, Nb and Al; the polymer comprises one or more of plant polysaccharides, marine polysaccharides, and the derivatives thereof;
wherein the positive electrode active material has a core-shell structure comprising the core and a shell cladding the core, wherein the shell comprises a first cladding layer cladding the core, a second cladding layer cladding the first cladding layer and a third cladding layer cladding the second cladding layer, wherein the first cladding layer comprises pyrophosphate MP₂O₇ and phosphate XPO₄, the second cladding layer comprises carbon, and the third cladding layer comprises a polymer comprising one or more of plant polysaccharides, marine polysaccharides, and the derivatives thereof.

The preparation methods of this application have no particular limitation on the source of the material. Optionally, the core material in the preparation method of the present application may be commercially available or may be prepared by the method of the present application. Optionally, the core material is prepared by the method described below.

In some embodiments, the step of providing a core material comprises:
step (1): mixing a manganese source, a source of element A and an acid in a solvent and stirring to obtain particles of a manganese salt doped with element A; and
step (2): mixing the particles of a manganese salt doped with element A, a lithium source, a phosphorus source, and a source of element R in a solvent to obtain a slurry, sintering under the protection of an inert gas atmosphere to obtain lithium manganese phosphate doped with elements A and R, wherein the lithium manganese phosphate doped with elements A and R has a chemical formula of Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S.

In some embodiments, optionally, the step (1) is carried out at a temperature in a range of 20-120°C, optionally 25-80°C.

In some embodiments, the stirring in the step (1) is carried out at 500-700 rpm for 60-420 minutes, optionally 120-360 minutes.

By controlling the reaction temperature, stirring rate and mixing time during doping, it may achieve uniform distribution of doping elements, reduce the lattice defects, inhibit the leaching-out of manganese ions, and reduce the interface side reaction between the positive electrode active material and the electrolytic solution, thereby promoting the specific capacity and rate performance and the like of the positive electrode active material.

It should be noted that in the present application, the source of an element may include one or more of elemental substance, sulfates, halides, nitrates, salts of organic acid, oxides or hydroxides of the element, provided that the source can achieve the purpose of the preparation method of the present application. As an example, the source of element A is selected from one or more of elemental substance, sulfates, halides, nitrates, salts of organic acid, oxides or hydroxides of element A. As an example, the source of element R is selected from one or more of elemental substance, sulfates, halides, nitrates, salts of organic acid, oxides or hydroxides, and inorganic acids of element R.

In some embodiments, optionally, the manganese source may be one or more selected from elemental manganese, manganese dioxide, manganese phosphate, manganese oxalate, and manganese carbonate.

In some embodiments, optionally, element A is iron, and optionally, the iron source is selected from one or more of ferrous carbonate, iron hydroxide, and ferrous sulfate.

In some embodiments, optionally, in the step (1), the acid is selected from one or more of hydrochloric acid, sulfuric acid, nitric acid, phosphoric acid, organic acids such as oxalic acid. In some embodiments, the acid is a acid with a concentration of 60 wt% or less.

In some embodiments, optionally, the inorganic acid of element R is chosen from one or more of phosphoric acid, nitric acid, boric acid, metasilicic acid, and orthosilicic acid.

In some embodiments, optionally, the lithium source may be one or more selected from lithium carbonate, lithium hydroxide, lithium phosphate, and lithium dihydrogen phosphate.

In some embodiments, optionally, the phosphorus source may be one or more selected from diammonium hydrogen phosphate, ammonium dihydrogen phosphate, ammonium phosphate and phosphoric acid.

In some embodiments, optionally, the carbon source in the present application is an organic carbon source, and the organic carbon source is selected from one or more of starch, sucrose, glucose, polyvinyl alcohol, polyethylene glycol, and citric acid.

In some embodiments, optionally, the solvent used in the preparation method of the present application is a solvent commonly used in the art. For example, the solvent used in the preparation method of the present application may be each independently selected from at least one of ethanol, and water (e.g., deionized water).

In some implementations, optionally, in the preparation of particles of manganese salt doped with element A, pH of the solution is controlled to be 4 to 6. It is to be noted that the pH of the obtained mixture may be adjusted in the present application by a method commonly used in the art, for example, by the addition of an acid or base.

In some implementations, optionally, in step (2), the molar ratio of the particles of manganese salt doped with element A, the lithium source, and the phosphorus source is 1:(0.5 to 2.1): (0.5 to 2.1).

In some embodiments, optionally, in the step (2), the sintering conditions are: sintering at 600-800 °C for 4-10 hours under an inert gas or a mixed atmosphere of inert gas and hydrogen. As a result, the crystallinity of the sintered material is higher, which can improve the specific capacity and rate performance of the positive electrode active material.

In some embodiments, optionally, the mixed atmosphere of inert gas and hydrogen is a mixture of nitrogen (70-90 volume %) and hydrogen (10-30 volume %).

In some embodiments, optionally, the MP₂O₇ power is a commercially available product, or optionally, the MP₂O₇ power is prepared by steps of: adding a source of element M and a phosphorus source to a solvent to obtain a mixture, adjusting pH of the mixture to be 4 to 6, stirring and fully reacting, and drying and sintering, to obtain MP₂O₇ power, wherein M is elected from one or more of Li, Fe, Ni, Mg, Co, Cu, Zn, Ti, Ag, Zr, Nb and Al.

In some embodiments, optionally, in the preparation of MP₂O₇ powder, the drying step is carried out at 100-300 °C, optionally 150-200 °C for 4-8 hours.

In some embodiments, optionally, in the preparation of MP₂O₇ powder, the sintering step is carried out at 500-800 °C, optionally 650-800 °C under an inert gas atmosphere for 4-10 hours.

In some implementations, optionally, the suspension of XPO₄ containing carbon source is commercially available, or optionally, preparation by the following methods: mixing the lithium source, the source of X, the phosphorus source, and the carbon source are mixed thoroughly in the solvent, and then heating the reaction mixture to 60-120 °C for 2-8 hours to obtain the suspension of XPO₄ containing carbon source. Optionally, the pH of the mixture is adjusted to 4-6 during the preparation of the suspension of XPO₄ containing carbon source.

In some embodiments, optionally, in the cladding step, the weight ratio of lithium manganese phosphate doped with elements A and R (core) : MP₂O₇ powder : suspension of XPO₄ containing carbon source is 1 :(0.001 to 0.05):(0.001 to 0.05).

In some embodiments, optionally, the sintering temperature for obtaining the core with the first and second cladding layers in the cladding step is 500-800 °C and the sintering time is 4-10 hours.

In some embodiments, in the cladding step (forming the third cladding layer), the drying may be carried out at a temperature of 50 °C to 160 °C, optionally 60 °C to 150 °C, more optionally 70 °C to 140 °C, even more optionally 80 °C to 130 °C, and most optionally 90 °C to 120 °C, the drying time may be 3-9 hours, optionally 4-8 hours, more optionally 5-7 hours, the most optionally about 6 hours.

In some embodiments, optionally, the median particle size Dv50 of the primary particles of the three-layer clad lithium manganese phosphate positive electrode active material of the present application is 50-2000 nm.

### Positive electrode plate

A third aspect of the present application provides a positive electrode plate comprising a positive electrode current collector and a positive electrode film layer provided on at least one surface of the positive electrode current collector, wherein the positive electrode film layer comprises the positive electrode active material of the first aspect of the present application or the positive electrode active material prepared by the method of the second aspect of the present application, and the positive electrode active material is present in the positive electrode film layer in a content of 10 wt% or more, based on the total weight of the positive electrode film layer.

The positive electrode current collector has two surfaces opposite to each other in the direction of its own thickness, and the positive electrode film layer is provided on either or both of two opposite surfaces of the positive electrode current collector.

In some embodiments, the positive electrode active material is present in the positive electrode film layer in a content of 90 wt% to 99.5 wt%, based on the total weight of the positive electrode film layer. The content of the positive electrode active material within the above range is conducive to giving full play to the advantage of the positive electrode active material of the preent application.

The positive electrode film layer does not exclude other positive electrode active materials than the positive electrode active material of the first aspect of the present application or the positive electrode active material prepared by the method of the second aspect of the present application. For example, the positive electrode film may also comprise at least one of a lithium transition metal oxide and a modified compound thereof. By way of example, the other positive electrode active material may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

In some embodiments, the positive electrode film layer may further optionally comprise a positive electrode conductive agent. In the present application, the type of the positive electrode conductive agent is not particularly limited. As an example, the positive electrode conductive agent comprises at least one of superconducting carbon, conductive graphite, acetylene black, carbon black, Ketjen black, carbon dots, carbon nanotubes, graphene, and carbon nanofibers.

In some embodiments, the positive electrode film layer may further optionally comprise a positive electrode binder. In the present application, the type of the positive electrode binder is not particularly limited. As an example, the positive electrode binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode current collector may be a metal foil or a composite current collector. As an example of a metal foil, an aluminum foil may be used. The composite current collector may comprise a polymeric material matrix and a metallic material layer formed on at least one surface of the polymeric material matrix. As an example, the metallic material may be selected from at least one of aluminum, aluminum alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The positive electrode film layer is usually made by applying a positive electrode slurry to the positive electrode current collector followed by drying and cold pressing. The positive electrode slurry is usually formed by dispersing the positive electrode active material, an optional conductive agent, an optional binder, and any other components in a solvent and stirring uniformly. The solvent may be N-methylpyrrolidone (NMP), but is not limited thereto.

### Secondary Battery

A fourth aspect of the present application provides a secondary battery comprising the positive electrode plate of the third aspect of the present application.

A secondary battery, also known as a rechargeable battery or accumulator, is a battery that can continue to be used by activating its active material by means of charging after the battery has been discharged. Typically, a secondary battery includes an electrode assembly and an electrolyte, and the electrode assembly includes a positive electrode plate, a negative electrode plate, and a separator. The separator is disposed between the positive electrode plate and the negative electrode plate, which mainly functions as preventing short circuit of the positive and negative electrodes and at the same time allowing active ions to pass through. The electrolyte functions as conducting active ions between the positive electrode plate and the negative electrode plate.

### [Positive electrode plate]

A positive electrode plate used in the secondary battery of this application is the positive electrode plate described in any one of embodiments of the third aspect of this application.

### [Negative electrode plate]

In some embodiments, the negative electrode plate comprises a negative electrode current collector and a negative electrode film layer provided on at least one surface of the negative electrode current collector and comprising a negative electrode active material. For example, the negative electrode current collector has two surfaces opposite to each other in the direction of its own thickness, and the negative electrode film layer is provided on either or both of two opposite surfaces of the negative electrode current collector.

The negative electrode active material may be a negative electrode active material known in the art for use in the secondary battery. By way of example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, a silicon alloy material. The tin-based materials may include at least one of elemental tin, a tin oxide, and a tin alloy material. The present application is not limited to these materials, and other conventionally known materials that can be used as negative electrode active materials for the secondary battery may also be used. These negative electrode active materials can be used alone, or in combination of two or more materials.

In some embodiments, the negative electrode film layer may also optionally comprise a negative electrode conductive agent. In the present application, the type of the negative conductive agent is not particularly limited and, as an example, the negative conductive agent may include at least one of superconducting carbon, conductive graphite, acetylene black, carbon black, Ketjen black, carbon dots, carbon nanotubes, graphene, and carbon nanofibers.

In some embodiments, the negative electrode film layer may further optionally comprise a negative electrode binder. In the present application, the type of the negative binder is not particularly limited and, as an example, the negative electrode binder may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), and carboxymethyl chitosan (CMCS).

In some embodiments, the negative electrode film layer may optionally also include other additives. As an example, the other additives may include thickeners, e.g., sodium carboxymethyl cellulose (CMC), and PTC thermistor material, etc.

In some embodiments, the negative electrode current collector may be a metal foil or a composite current collector. As an example of a metal foil, a copper foil may be used. The composite current collector may include a polymeric material matrix and a metallic material layer formed on at least one surface of the polymeric material matrix. As an example, the metallic material may be selected from at least one of copper, copper alloy, nickel, nickel alloy, titanium, titanium alloy, silver, and silver alloy. As an example, the polymer material matrix may be selected from polypropylene (PP), polyethylene terephthalate (PET), polybutylene terephthalate (PBT), polystyrene (PS), polyethylene (PE), etc.

The negative electrode film layer is usually made by applying a negative electrode slurry to the negative electrode current collector followed by drying and cold pressing. The negative electrode slurry is usually formed by dispersing the negative active material, an optional conductive agent, an optional binder, and any other optional additives in a solvent and stirring uniformly. The solvent may be N-methylpyrrolidone (NMP) and deionized water, but is not limited thereto.

The negative electrode plate does not exclude other additional functional layers than the negative electrode film layer. For example, in some embodiments, the negative electrode plate described in the present application further comprises a conductive primer (e.g. being composed of a conductive agent and a binder) sandwiched between the negative electrode current collector and the negative electrode film layer and disposed on the surface of the negative electrode current collector. In some other embodiments, the negative electrode plate described in this application further comprises a protective layer cladding the surface of the negative electrode film layer.

### [Electrolyte]

The type of electrolyte is not specifically restricted in the present application, and can be selected by those skilled in the art according to actual requirements. For example, the electrolyte may be at least one selected from solid electrolyte and liquid electrolyte (i.e., electrolytic solution).

In some embodiments, an electrolytic solution is used as the electrolyte. The electrolytic solution includes an electrolyte salt and a solvent.

The type of electrolyte salt is not specifically restricted in the present application, and can be selected by those skilled in the art according to actual requirements. In some embodiments, as an example, the electrolyte salt may comprise at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethane sulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of solvent is not specifically restricted in the present application, and can be selected by those skilled in the art according to actual requirements. In some embodiments, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may also optionally include additives. For example, the additives may include negative electrode film-forming additives, and may include positive electrode film-forming additives, and yet may include additives that can improve certain performances of battery, for example, additives that improve battery overcharge performance, additives that improve high-temperature performance of battery, and additives that improve low-temperature performance of battery.

### [Separator]

In the secondary battery using an electrolytic solution and some secondary battery using a solid electrolyte, separators may be further included. The separators are arranged between the positive electrode plate and the negative electrode plate, and mainly function as preventing short circuit of the positive and negative electrodes while allowing active ions to pass through. There is no particular limitation on the type of separator in the present application, and any well-known porous-structure separator with good chemical stability and mechanical stability may be used.

In some embodiments, materials of the separator may be at least one of glass fibers, non-woven fabrics, polyethylene, polypropylene and polyvinylidene fluoride. The separator may be a single-layer film or a multi-layer composite film. When the separator is a multi-layer composite film, materials of each layer may be the same or different.

In some embodiments, the positive electrode plate, the separator, and the negative electrode plate may be made into an electrode assembly by a winding process or a stacking process.

In some embodiments, the secondary battery may include an outer package. The outer package may be used to encapsulate the electrode assembly and electrolyte.

In some embodiments, the outer package of the secondary battery may be a hard case, such as a hard plastic case, an aluminum case, a steel case, and the like. The outer package of the secondary battery may also be a soft package, such as a pouch-type soft package. The material of the soft bag can be plastic, such as at least one of polypropylene (PP), polybutylene terephthalate (PBT), and polybutylene succinate (PBS).

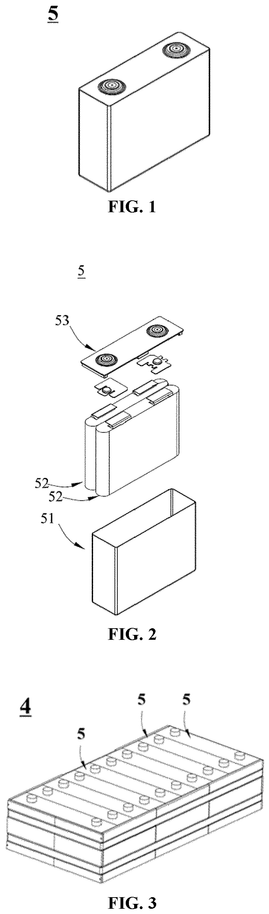

The present application does not have particular limitation on the shape of the secondary battery. The secondary battery may be cylindrical, square, or in other arbitrary shape. Fig. 1 shows a secondary battery 5 with a cuboid structure as an example.

In some embodiments, referring to Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or stacked to form an electrode assembly 52, which is encapsulated in the receiving cavity. The electrolytic solution is infiltrated into the electrode assembly 52. The number of electrode assemblies 52 contained in the secondary battery 5 may be one or more, which may be adjusted according to the demand.

The method for preparing the secondary battery of the present application is well known. In some embodiments, a positive electrode plate, a separator, a negative electrode plate, and an electrolytic solution may be assembled to form a secondary battery. As an example, a positive electrode plate, a separator, and a negative electrode plate can be made into an electrode assembly by a winding process or a stacking process, and the electrode assembly can be placed in an outer package and is subjected to drying, to which an electrolytic solution is injected. After vacuum encapsulation, resting, chemical formation, and shaping process, a secondary battery can be obtained.

In some embodiments of the present application, the secondary battery according to the present application can be assembled into a battery module, and the number of secondary battery contained in the battery modules can be more than one, and the specific number can be adjusted according to application and capacity of the battery module.

Fig. 3 is a schematic diagram of the battery module 4 as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

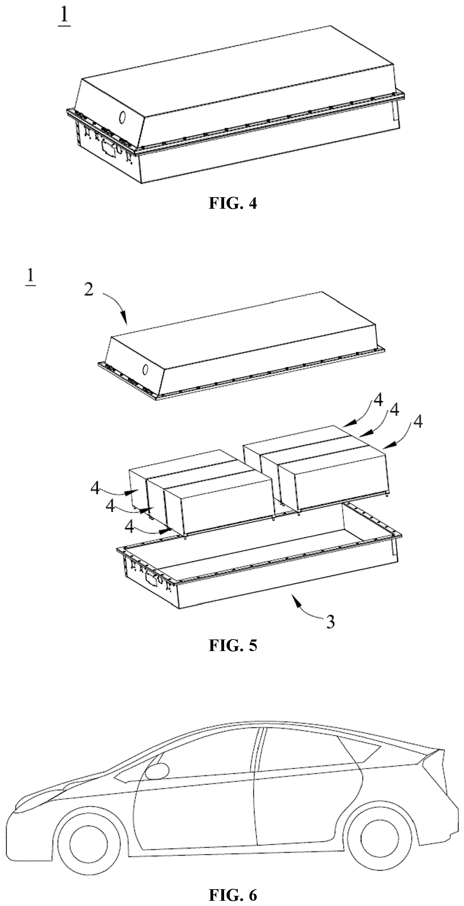

Figs. 4 and 5 are schematic diagrams of the battery pack 1 as an example. As shown in Figs. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Electrical device

A fifth aspect of the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

The sources of raw materials involved in examples of the present application are as follows:

| Name | Chemical Formula | Supplier | Specification |
|---|---|---|---|
| Manganese Carbonate | MnCO₃ | Shandong West Asia Chemical Industry Co. | 1Kg |
| Lithium Carbonate | Li₂CO₃ | Shandong West Asia Chemical Industry Co. | 1Kg |
| Magnesium carbonate | MgCO₃ | Shandong West Asia Chemical Industry Co. | 1Kg |
| Zinc Carbonate | ZnCO₃ | Wuhan Xinru Chemical Co. | 25Kg |
| Ferrous Carbonate | FeCO₃ | Xi'an Lanzhiguang Fine Material Co. | 1Kg |
| Nickel Carbonate | NiCO₃ | Shandong West Asia Chemical Industry Co. | 1Kg |
| Titanium Sulfate | Ti(SO₄)₂ | Shandong West Asia Chemical Industry Co. | 1Kg |
| Cobalt Sulfate | CoSO₄ | Xiamen Zhixin Chemical Co. | 500g |
| Vanadium Dichloride | VCl₂ | Shanghai Jin Jin Le Industry Co. | 1Kg |
| Oxalic acid dihydrate | C₂H₂O₄^{•}2(H₂O) | Shanghai Jin Jin Le Industry Co. | 1Kg |
| Ammonium dihydrogen phosphate | NH₄H₂PO₄ | Shanghai Chengshao Biotechnology Co. | 500g |
| Sucrose | C₁₂H₂₂O₁₁ | Shanghai Yuanye Biotechnology Co. | 100g |
| Sulfuric acid | H₂SO₄ | Shenzhen Haisian Biotechnology Co. | In a mass percentage of 60% |
| Nitric acid | HNO₃ | Anhui Lingtian Fine Chemical Co. | In a mass percentage of 60% |
| Metasilicic acid | H₂SiO₃ | Shanghai Yuanye Biotechnology Co. | 100g |
| Boric acid | H₃BO₃ | Changzhou Qidi Chemical Co. | 1Kg |

### Example 1-1

### Preparation of positive active materials

### (1) Preparation of co-doped lithium manganese phosphate core

Preparation of Fe, Co and V codoped manganese oxalate: 689.5 g of manganese carbonate (as MnCO₃, hereinafter the same), 455.2 g of ferrous carbonate (as FeCO₃, hereinafter the same), 4.6 g of cobalt sulphate (as CoSO₄, hereinafter the same), and 4.9 g of vanadium dichloride (as VCl₂, hereinafter the same) were mixed thoroughly for 6 hours in a mixer. The mixture was transferred to a reaction kettle to which 5 liters of deionized water and 1260.6 g of oxalic acid dihydrate (as C₂H₂O₄.2H₂O, hereinafter the same) were added. The reaction kettle was heated to 80 °C and the content was stirred at 600 rpm for 6 hours until the reaction ended (no bubbles were generated) to obtain a Fe, Co, V and S co-doped manganese oxalate suspension. The suspension was then filtered and the filter cake was dried at 120°C, after which it was ground to obtain Fe, Co and V co-doped manganese oxalate dihydrate particles with a median particle size Dv50 of 100 nm.

Preparation of Fe, Co, V and S co-doped lithium manganese phosphate: the manganese oxalate dihydrate particles (1793.4 g) obtained in the previous step, 369.0 g of lithium carbonate (as Li₂CO₃, hereinafter the same), 1.6 g of diluted sulfuric acid (as 60% H₂SO₄, hereinafter the same) at a concentration of 60% and 1148.9 g of ammonium dihydrogen phosphate (as NH₄H₂PO₄, hereinafter the same) were added to 20 liters of deionized water, and the mixture was stirred for 10 hours to homogenize the mixture to obtain a slurry. The slurry was transferred to a spray drying apparatus for spray drying and granulation with a drying temperature set at 250°C for 4 hours to obtain powder. In a protective atmosphere of nitrogen (90 vol%) + hydrogen (10 vol%), the powder was sintered at 700°C for 4 hours to obtain 1572.1 g of Fe, Co, V and S co-doped lithium manganese phosphate, i.e., the core.

### (2) Preparation of lithium iron pyrophosphate and lithium iron phosphate

Preparation of lithium iron pyrophosphate powder: 4.77 g of lithium carbonate, 7.47 g of ferrous carbonate, 14.84 g of ammonium dihydrogen phosphate and 1.3 g of oxalic acid dihydrate were dissolved in 50 mL of deionized water. The mixture had a pH of 5. The reaction mixture was allowed to fully react with stirring for 2 hours. The reacted solution was then warmed to 80 °C and maintained at that temperature for 4 hours to obtain a suspension comprising Li₂FeP₂O₇. The suspension was filtered, and the resulting filter cake was washed with deionized water and dried at 120 °C for 4 hours to obtain a powder. The powder was sintered at 650°C under nitrogen atmosphere for 8 hours and subjected to grinding, and then was naturally cooled to room temperature, thereby obtaining Li₂FeP₂O₇ powder.

Preparation of lithium iron phosphate suspension: 11.1 g of lithium carbonate, 34.8 g of ferrous carbonate, 34.5 g of ammonium dihydrogen phosphate, 1.3 g of oxalic acid dihydrate, and 74.6 g of sucrose (as C₁₂H₂₂O₁₁, hereinafter the same) were dissolved in 150 mL of deionized water to obtain a mixture. The reaction mixture was allowed to fully react with stirring for 6 hours. The reacted solution was then warmed to 120 °C and maintained at that temperature for 6 hours to obtain a suspension containing LiFePO₄.

Preparation of polysaccharide solution: 15.7g of carboxymethyl chitosan was dissolved in 1000g of deionized water, then stirred and fully dissolved to obtain a polysaccharide solution.

### (3) Cladding

1572.1 g of the above prepared Fe, Co, V and S co-doped lithium manganese phosphate (core) and 15.72 g of the above prepared lithium iron pyrophosphate (Li₂FeP₂O₇) powder were added to the lithium iron phosphate (LiFePO₄) suspension prepared in the previous step, mixed thoroughly with stirring and then transferred to a vacuum oven to be dried for 6 hours at 150 °C. The resulting product was then dispersed by sand milling. After dispersion, the obtained product was sintered in a nitrogen atmosphere at 700°C for 6 hours to obtain a core with the first and second cladding layers.

The core material with the first and the second cladding layers was added to the polysaccharide solution obtained in the previous step, stirred and mixed thoroughly, and then transferred to a vacuum oven and dried at 120 °C for 4 hours to obtain a positive electrode active material. Substituent attached to the sugar unit is present in a mass percentage of 60.2% in carboxymethyl chitosan, the number average molecular weight is 26000, and the cladding amount is 1 wt%, based on the weight of the core.

### Preparation of positive electrode plate

The prepared three-layer clad lithium manganese phosphate positive electrode active material, acetylene black as a conductive agent, and polyvinylidene fluoride (PVDF) as a binder at a weight ratio of 92:2.5:5.5 were added to N-methylpyrrolidone (NMP), stirred and mixed thoroughly to obtain a positive electrode slurry. The positive electrode slurry was then uniformly applied to an aluminum foil at 0.280g/1540.25mm², and then dried, cold pressed, and slit to obtain a positive electrode plate.

### Preparation of negative electrode plate

Artificial graphite as a negative active material, hard carbon, acetylene black as a conductive agent, styrene butadiene rubber (SBR) as a binder, sodium carboxymethyl cellulose (CMC) as a thickener at a weight ratio of 90:5:2:2:1 were dissolved in a solvent deionized water, which was stirred and mixed well to prepare a negative electrode slurry. The negative electrode slurry was uniformly applied to a copper foil as a current collector at 0.117g/1540.25mm², and then dried, cold pressed, and slit to obtain a negative electrode plate.

### Preparation of electrolytic solution

In an argon atmosphere glove box (H₂O<0.1 ppm, O₂<0.1 ppm), as an organic solvent, ethylene carbonate (EC)/ethylmethylmethane carbonate (EMC) were mixed thoroughly at a volume ratio of 3/7, to which 12.5 wt% (based on the weight of the organic solvent) of LiPF₆ was added so as to be dissolved therein, and the resulting mixture was stirred thoroughly, to obtain an electrolytic solution.

### Separator

A commercially available PP-PE copolymer microporous film with a thickness of 20 µm and an average pore size of 80 nm was used (from Trico Electronic Technology, model 20).

### Preparation of full battery

The positive electrode plate, separator and negative electrode plate were stacked in order, so that the separator was sandwiched between the positive and negative electrodes for isolation, and then they were wound to form an electrode assembly. The electrode assembly was placed in an outer package, filled with the above electrolytic solution, and encapsulated to obtain a full battery.

### Preparation of button battery

The prepared three-layer clad lithium manganese phosphate positive electrode active material, PVDF and acetylene black at a weight ratio of 90:5:5 were added to NMP and stirred in a drying room to make a slurry. The above slurry was applied to an aluminum foil, dried and cold pressed to form a positive electrode plate. The cladding amount was 0.2g/cm² and the compaction density was 2.0g/cm³.

Lithium plate was used as a negative electrode, 1 mol/L solution of LiPF₆ in ethylene carbonate (EC), diethyl carbonate (DEC) and dimethyl carbonate (DMC) at volume ratio of 1:1:1 was used as an electrolytic solution, and they were assembled together with the above prepared positive electrode plate in a button battery box to form a button battery (hereinafter also referred to as "button").

### Examples 1-2 to 1-6

In the preparation of co-doped lithium manganese phosphate cores, the conditions for the preparation of lithium manganese phosphate cores in Examples 1-2 to 1-6 were the same as those in Example 1-1 with the exception that vanadium dichloride and cobalt sulfate were not used, and that 463.4 g of ferrous carbonate, 1.6 g of dilute sulfuric acid at a concentration of 60%, 1148.9 g of ammonium dihydrogen phosphate, and 369.0 g of lithium carbonate were used.

In addition, in the preparation of lithium iron pyrophosphate and lithium iron phosphate and in the process of cladding the first cladding layer, the second cladding layer and the third cladding layer, other conditions were the same as those in Example 1-1 except that the raw materials used were adjusted according to ratios of their cladding amounts as shown in Table 1 to the cladding amount corresponding to Examples 1-1, so that the amounts of Li₂FeP₂O₇/LiFePO₄ in Examples 1-2 to 1-6 were respectively 12.6 g/37.7 g, 15.7 g /47.1 g, 18.8 g/56.5 g, 22.0/66.0 g, and 25.1 g/75.4 g, the amount of sucrose in Examples 1-2 to 1-6 was 37.3 g, and the amount of carboxymethyl chitosan in the cladding process in Examples 1-2 to 1-6 was adjusted to 1% of the weight of the core obtained.

### Examples 1-7 to 1-10

The conditions in Examples 1-7 to 1-10 were the same as those in Example 1-3 with the exception that the amount of sucrose was 74.6 g, 149.1 g, 186.4 g, and 223.7 g, respectively, so that the corresponding cladding amounts of carbon layer as a second cladding layer were 31.4 g, 62.9 g, 78.6 g, and 94.3 g, respectively, and the amount of carboxymethyl chitosan in the cladding process was adjusted to 1% of the weight of the core obtained.

### Examples 1-11 to 1-14

The conditions in Examples 1-11 to 1-14 were the same as those in Example 1-7 with the exception that in the preparation of lithium iron pyrophosphate and lithium iron phosphate, the amounts of various raw materials were adjusted according to the cladding amounts shown in Table 1 so that the amounts of Li₂FeP₂O₇/LiFePO₄ were 23.6g/39.3g, 31.4g/31.4g, 39.3g/23.6g, and 47.2g/15.7g, respectively, and the amount of carboxymethyl chitosan in the cladding process was adjusted to 1% of the weight of the core obtained.

### Example 1-15

The conditions in Example 1-15 were the same as those in Example 1-14 with the exception that in the preparation of co-doped lithium manganese phosphate core, 492.80 g of zinc carbonate was used instead of ferrous carbonate, and the amount of carboxymethyl chitosan in the cladding process was adjusted to 1% of the weight of the core obtained.

### Examples 1-16 to 1-18

The conditions in Examples 1-16 to 1-18 were the same as those in Example 1-7 with the exception that in the preparation of co-doped lithium manganese phosphate core of Example 1-16, 466.4 g of nickel carbonate, 5.0 g of zinc carbonate, and 7.2 g of titanium sulfate were used instead of ferrous carbonate; in the preparation of co-doped lithium manganese manganese phosphate core of Example 1-17, 455.2 g of ferrous carbonate and 8.5 g of vanadium dichloride were used; and in the preparation of co-doped lithium manganese manganese phosphate core, 455.2 g of ferrous carbonate, 4.9 g of vanadium dichloride and 2.5 g of magnesium carbonate were used, and the amount of carboxymethyl chitosan in the cladding process in Examples 1-16 to 1-18 was adjusted to 1% of the weight of the core obtained.

### Examples 1-19 to 1-20

The conditions in Examples 1-19 to 1-20 were the same as those in Example 1-18 with the exception that in the preparation of co-doped lithium manganese phosphate core of Example 1-19, 369.4 g of lithium carbonate was used, and 1.05 g of dilute nitric acid at a concentration of 60% was used instead of dilute sulfuric acid; and in the preparation of co-doped lithium manganese phosphate core of Example 1-20, 369.7 g of lithium carbonate was used, and 0.78 g of silicic acid was instead of dilute sulfuric acid, and the amount of carboxymethyl chitosan in the cladding process in Examples 1-19 to 1-20 was adjusted to 1% of the weight of the core obtained.

### Examples 1-21 to 1-22

The conditions in Examples 1-21 to 1-22 were the same as those in Example 1-20 with the exception that in the preparation of co-doped lithium manganese phosphate core of Example 1-21, 632.0 g of manganese carbonate, 463.30 g of ferrous carbonate, 30.5 g of vanadium dichloride, 21.0 g of magnesium carbonate, and 0.78 g of silicic acid were used; and in the preparation of co-doped lithium manganese phosphate core of Example 1-22, 746.9 g of manganese carbonate, 289.6 g of ferrous carbonate, 60.9 g of vanadium dichloride, 42.1 g of magnesium carbonate, and 0.78 g of silicic acid were used, and the amount of carboxymethyl chitosan in the cladding process in Examples 1-21 to 1-22 was adjusted to 1% of the weight of the core obtained.

### Examples 1-23 to 1-24

The conditions in Examples 1-23 to 1-24 were the same as those in Example 1-22 with the exception that in the preparation of the co-doped lithium manganese phosphate core of Example 1-23, 804.6 g of manganese carbonate, 231.7 g of ferrous carbonate, 1156.2 g of ammonium dihydrogen phosphate, 1.2 g of boric acid (in a mass fraction of 99.5%), and 370.8 g of lithium carbonate were used; and in the preparation of the co-doped lithium manganese phosphate core of Example 1-24, 862.1 g of manganese carbonate, 173.8 g of ferrous carbonate, 1155.1 g of ammonium dihydrogen phosphate, 1.86 g of boric acid (in a mass fraction of 99.5%), and 371.6 g of lithium carbonate were used, and the amount of carboxymethyl chitosan in the cladding process in Examples 1-23 to 1-24 was adjusted to 1% of the weight of the core obtained.

### Examples 1-25

The conditions in Example 1-25 were the same as those in Example 1-20 with the exception that in the preparation of the co-doped lithium manganese phosphate core of Example 1-25, 370.1 g of lithium carbonate, 1.56 g of silicic acid and 1147.7 g of ammonium dihydrogen phosphate were used, and the amount of carboxymethyl chitosan in the cladding process was adjusted to 1% of the weight of the core obtained.

### Examples 1-26

The conditions in Example 1-26 were the same as those in Example 1-20 with the exception that in the preparation of the co-doped lithium manganese phosphate core of Example 1-26, 368.3 g of lithium carbonate, 4.9 g of dilute sulfuric acid at 60% by mass, 919.6 g of manganese carbonate, 224.8 g of ferrous carbonate, 3.7 g of vanadium dichloride, 2.5 g of magnesium carbonate and 1146.8 g of ammonium dihydrogen phosphate were used, and the amount of carboxymethyl chitosan in the cladding process was adjusted to 1% of the weight of the core obtained.

### Examples 1-27

The conditions in Example 1-27 were the same as those in Example 1-20 with the exception that in the preparation of the co-doped lithium manganese phosphate core of Example 1-27, 367.9 g of lithium carbonate, 6.5 g of dilute sulfuric acid at a concentration of 60% and 1145.4 g of ammonium dihydrogen phosphate were used, and the amount of carboxymethyl chitosan in the cladding process was adjusted to 1% of the weight of the core obtained.

### Examples 1-28 to 1-33

The conditions in Examples 1-28 to 1-33 were the same as those in Example 1-20 with the exception that in the preparation of the co-doped lithium manganese phosphate core of Example 1-28 to 1-33, 1034.5g of manganese carbonate, 108.9g of ferrous carbonate, 3.7g of vanadium dichloride and 2.5g of magnesium carbonate were used, lithium carbonate was used in an amount of 367.6g, 367.2g, 366.8g, 366.4g, 366.0g and 332.4g, respectively, ammonium dihydrogen phosphate was used in an amount of 1144.5g, 1143.4g, 1142.2g, 1141.1g, 1139.9g and 1138.8g, respectively, dilute sulfuric acid with a concentration of 60% was used in an amount of 8.2g, 9.8g, 11.4g, 13.1g, 14.7g and 16.3g, respectively, and the amount of carboxymethyl chitosan in the cladding process in Examples 1-28 to 1-33 was adjusted to 1% of the weight of the core obtained.

### Example 2-1

Example 2-1 was the same as Example 1-1 with the exception that in the preparation of lithium iron pyrophosphate (Li₂FeP₂O₇), the sintering temperature in the powder sintering step was 550°C and the sintering time was 1 hour to control the crystallinity of Li₂FeP₂O₇ to be 30%, and in the preparation of lithium iron phosphate (LiFePO₄), the sintering temperature in sintering of the cladding step was 650°C and the sintering time was 2 hours to control the crystallinity of LiFePO₄ to be 30%.

### Example 2-2

Example 2-2 was the same as Example 1-1 with the exception that in the preparation of lithium iron pyrophosphate (Li₂FeP₂O₇), the sintering temperature in the powder sintering step was 550°C and the sintering time was 2 hours to control the crystallinity of Li₂FeP₂O₇ to be 50%, and in the preparation of lithium iron phosphate (LiFePO₄), the sintering temperature in sintering of the cladding step was 650°C and the sintering time was 3 hours to control the crystallinity of LiFePO₄ to be 50%.

### Example 2-3

Example 2-3 was the same as Example 1-1 with the exception that in the preparation of lithium iron pyrophosphate (Li₂FeP₂O₇), the sintering temperature in the powder sintering step was 600°C and the sintering time was 3 hours to control the crystallinity of Li₂FeP₂O₇ to be 70%, and in the preparation of lithium iron phosphate (LiFePO₄), the sintering temperature in sintering of the cladding step was 650°C and the sintering time was 4 hours to control the crystallinity of LiFePO₄ to be 70%.

### Examples 3-1 to 3-10

Examples 3-1 to 3-10 were the same as Example 1-1 with the exception that in the preparation of positive electrode active material, the carboxymethyl chitosan was replaced with hydroxyethyl cellulose (the substituent attached to the sugar unit is present in a mass percentage of 45.9%, the number average molecular weight is 59800), carboxymethyl cellulose (the substituent attached to the sugar unit is present in a mass percentage of 53.3%, the number average molecular weight is 90000), guar gum (the substituent attached to the sugar unit is present in a mass percentage of 38.0%, the number average molecular weight is 30400), hydroxypropyl starch (the substituent attached to the sugar unit is present in a mass percentage of 40.8%, the number average molecular weight is 47300), sodium alginate (the substituent attached to the sugar unit is present in a mass percentage of 44.0%, the number average molecular weight is 18000), fucoidan (the substituent attached to the sugar unit is present in a mass percentage of 42.4%, the number average molecular weight is 23000), agar (the substituent attached to the sugar unit is present in a mass percentage of 39.0%, the number average molecular weight is 26800), carrageenan (the substituent attached to the sugar unit is present in a mass percentage of 62.3%, the number average molecular weight is 32000), carboxymethyl chitosan (the substituent attached to the sugar unit is present in a mass percentage of 15.0%, the number average molecular weight is 112000), carboxymethyl chitosan (the substituent attached to the sugar unit is present in a mass percentage of 90.0%, the number average molecular weight is 76400), respectively.

### Examples 3-11 to 3-15

Examples 3-11 to 3-15 were the same as Example 1-1 with the exception that in the preparation of positive electrode active material, the cladding amount of carboxymethyl chitosan was replaced with 0.1 wt% (the mass of the carboxymethyl chitosan is 1.6 g), 2 wt% (the mass of the carboxymethyl chitosan is 31.4 g), 5 wt % (the mass of the carboxymethyl chitosan is 78.5 g), 10 wt % (the mass of the carboxymethyl chitosan is 157.1 g), 12 wt % (the mass of the carboxymethyl chitosan is 188.4 g), based on the weight of the core.

### Examples 3-16 to 3-22

Examples 3-16 to 3-22 were the same as Example 1-1 with the exception that in the preparation of positive electrode active material, the_number average molecular weight of carboxymethyl chitosan was replaced with 10000 (the substituent attached to the sugar unit is present in a mass percentage of 61.3%), 20000 (the substituent attached to the sugar unit is present in a mass percentage of 60.8%), 50000 (the substituent attached to the sugar unit is present in a mass percentage of 58.2%) and 80000 (the substituent attached to the sugar unit is present in a mass percentage of 56.8%), 120000 (the substituent attached to the sugar unit is present in a mass percentage of 55.7%), 200000 (the substituent attached to the sugar unit is present in a mass percentage of 55.1%), and 300000 (the substituent attached to the sugar unit is present in a mass percentage of 54.9%), respectively.

### Comparative Example 1

Preparation of manganese oxalate: 1149.3 g of manganese carbonate was added to a reaction kettle and 5 L of deionized water and 1260.6 g of oxalic acid dihydrate (as C₂H₂O₄•2H₂O, hereinafter the same) were added. The reaction kettle was heated to 80°C and stirred at 600 rpm for 6 h until the reaction ended (no bubbles were generated) and a suspension of manganese oxalate was obtained. Then the suspension was filtered and the resulting filter cake was dried at 120°C, after which it was ground to obtain particles of manganese oxalate with a median particle size D_{V50} of 100 nm.

Preparation of lithium manganese phosphate cladded with carbon: 1789.6 g of the above prepared particles of manganese oxalate dihydrate, 369.4 g of lithium carbonate (as Li₂CO₃, hereinafter the same), 1150.1 g of ammonium dihydrgen phosphate (as NH₄H₂PO₄, hereinafter the same) and 31 g of sucrose (as C₁₂H₂₂O₁₁, hereinafter the same) were added to 20 liters of deionized water. The mixture was stirred for 10 hours thoroughly to obtain a slurry. The slurry was transferred to a spray drying equipment for spray drying granulation, with a drying temperature of 250°C for 4 hours to obtain powder. The above powder was sintered at 700°C for 4 hours in a protective atmosphere of nitrogen (90 vol%) + hydrogen (10 vol%) to obtain lithium manganese phosphate cladded with carbon.

### Comparative Example 2

The conditions in Comparative Example 2 were the same as those in Comparative Example 1 with the exception that 689.5 g of manganese carbonate was used and 463.3 g of ferrous carbonate was additionally added.

### Comparative Example 3

The conditions in Comparative Example 3 were the same as those in Comparative Example 1 with the exception that 1148.9 g of ammonium dihydrogen phosphate and 369.0 g of lithium carbonate were used, and 1.6 g of dilute sulfuric acid at a concentration of 60% was additionally added.

### Comparative Example 4

The conditions in Comparative Example 4 were the same as those in Comparative Example 1 with the exception that 689.5 g of manganese carbonate, 1148.9 g of ammonium dihydrogen phosphate and 369.0 g of lithium carbonate were used and 463.3 g of ferrous carbonate and 1.6 g of dilute sulphuric acid at a concentration of 60% were additionally added.

### Comparative Example 5

The conditions in Comparative Example 5 were the same as those in Comparative Example 4 with the exception that the following steps were additionally added. Preparation of lithium iron pyrophosphate powder: 9.52 g of lithium carbonate, 29.9 g of ferrous carbonate, 29.6 g of ammonium dihydrogen phosphate and 32.5 g of oxalic acid dihydrate were dissolved in 50 mL of deionized water. The mixture had a pH of 5. The reaction mixture was allowed to fully react with stirring for 2 hours. The reacted solution was then warmed to 80 °C and maintained at that temperature for 4 hours to obtain a suspension comprising Li₂FeP₂O₇, which was filtered. The resulting filter cake was washed with deionized water and dried at 120 °C for 4 hours to obtain powder. The powder was sintered at 500°C under a nitrogen atmosphere for 4 hours and naturally cooled it to room temperature and then ground so that the crystallinity of Li₂FeP₂O₇ was controlled to be 5%, and in the preparation of the carbon-clad material, the amount of Li₂FeP₂O₇ was 62.8g.

### Comparative Example 6

The conditions in Comparative Example 6 were the same as those in Comparative Example 4 with the exception that the following steps were additionally added. Preparation of suspension of lithium iron phosphate: 14.7 g of lithium carbonate, 46.1 g of ferrous carbonate, 45.8 g of ammonium dihydrogen phosphate, and 50.2 g of oxalic acid dihydrate were dissolved in 500 mL of deionized water and then allowed to fully react with stirring for 6 hours. The reacted solution was then heated to 120°C and maintained at that temperature for 6 hours to obtain a suspension comprising LiFePO₄. In the preparation of lithium iron phosphate (LiFePO₄), the sintering temperature in sintering of the cladding step was 600°C and the sintering time in the cladding sintering step was 4 hours to control the crystallinity of LiFePO₄ to 8%, and in the preparation of the carbon-clad material, the amount of LiFePO₄ was 62.8g.

### Comparative Example 7

Preparation of lithium iron pyrophosphate powder: 2.38 g of lithium carbonate, 7.5 g of ferrous carbonate, 7.4 g of ammonium dihydrogen phosphate and 8.1 g of oxalic acid dihydrate were dissolved in 50 mL of deionized water. The mixture has a pH of 5. The reaction mixture was allowed to fully react with stirring for 2 hours. The reacted solution was then warmed to 80 °C and maintained at that temperature for 4 hours to obtain a suspension comprising Li₂FeP₂O₇, which was filtered. The resulting filter cake was washed with deionized water and dried at 120 °C for 4 hours to obtain powder. The powder was sintered at 500 °C under nitrogen atmosphere for 4 hours and ground after it was naturally cooled to room temperature, so as to control the crystallinity of Li₂FeP₂O₇ to be 5%.

Preparation of lithium iron phosphate suspension: 11.1 g of lithium carbonate, 34.7 g of ferrous carbonate, 34.4 g of ammonium dihydrogen phosphate, 37.7 g of oxalic acid dihydrate, and 37.3 g of sucrose (as C₁₂H₂₂O₁₁, hereinafter the same) were dissolved in 1,500 mL of deionized water, and then the mixture was allowed to fully react with stirring for 6 hours. The reacted solution was then warmed to 120 °C and maintained at that temperature for 6 hours to obtain a suspension containing LiFePO₄.

Other conditions of Comparative Example 7 were the same as those of Comparative Example 4 with the exception that 15.7 g of the obtained lithium iron pyrophosphate powder was added to the above suspension of lithium iron phosphate (LiFePO₄) and sucrose, and the sintering temperature in sintering of the cladding step was 600°C, and the sintering time was 4 hours to control the crystallinity of LiFePO₄ to be 8%, thereby obtaining positive electrode active materials cladded with amorphous lithium iron pyrophosphate, amorphous lithium iron phosphate, and carbon.

### Comparative Example 8

Conditions of Comparative Example 8 were the same as Example 1-1 with the exception that no third cladding layer was cladded in the preparation of the positive electrode active material.

The preparation of the positive electrode plate, the preparation of the negative electrode plate, the preparation of the electrolytic solution, and the preparation of the separator and the button battery in the above Examples and Comparative Examples were the same as the process of Example 1-1.

### Test methods for related performance parameters

### 1. Determination of the chemical formula of core and the composition of different cladding layer

The internal microstructure and surface structure of the positive electrode active material were characterized with high spatial resolution by a spherical Aberration Corrected Scanning Transmission Electron Microscope (ACSTEM). By combining with a three-dimensional reconstruction technology, the chemical formula of the core and the composition of the first, second and third cladding layers of the positive electrode active material were obtained.

### 2. Determination of initial specific capacity of button battery

The above prepared button battery was charged to 4.3V at 0.1C, then charged at a constant voltage of 4.3V until the current was less than or equal to 0.05 mA. It was allowed to stand for 5 minutes. Then the button battery was discharged at 0.1C to 2.0V. The discharge capacity measured at this moment was the initial specific capacity, denoted as D0.

### 3. Determination of average discharge voltage (V) of button battery

Under a constant temperature environment of 25°C, the above prepared button battery was allowed to stand for 5 minutes, then was discharged to 2.5V at 0.1C, then was allowed to stand for 5 minutes, then charged to 4.3 V at 0.1C, then was charged at a constant voltage of 4.3V until the current was less than or equal to 0.05mA, then was allowed to stand for 5 minutes; and then was discharged to 2.5V at 0.1C. The discharge capacity measured at this moment was the initial specific capacity, denoted as D0, and the discharge energy at this moment was the initial energy, denoted as E0. The average discharge voltage (V) of button battery was E0/D0.

### 4. Test of gas expansion at 60°C of full battery

The above prepared full battery was stored at 100% state of charge (SOC) at 60°C. Before, during, and after storage, open circuit voltage (OCV) and AC internal impedance (IMP) of the battery were tested to monitor SOC and volume of the battery was measured. After every 48 hours of storage, the full battery was taken out and allowed to stand for 1 hour, and then open circuit voltage (OCV) and internal impedance (IMP) were tested. After it was cooled to room temperature, volume of the battery was measured using a drainage method. The drainage method included measuring gravity F₁ of the battery alone with a balance that can automatically perform unit conversion with a dial data, and then placing the battery completely in deionized water (with a density of 1g/cm³), measuring gravity F₂ of the battery at this moment wherein a buoyant force F_{b} of the battery was F₁-F₂, and then according to the Archimedes principle F_{b} = ρ× g × V, the volume of the battery was calculated: V=( F₁-F₂)/(ρ×g).

From the OCV and IMP test results, it can be seen that the batteries of the examples maintain a SOC of 99% or higher throughout the testing process until the end of storage.

After 30 days of storage, the volume of battery was measured, and the increased percentage in battery volume after storage compared to the previous battery volume was calculated.

### 5. Test of cycle performance at 45 °C of full battery

Under a constant temperature environment of 45°C, the above prepared full battery was charged at 1C to 4.3V, and then charged at a constant voltage at 4.3V until the current was less than or equal to 0.05 mA. The full battery was allowed to stand for 5 minutes, then discharged at 1C to 2.5V. The discharge capacity at this moment was reported as D0. The above charge-discharge cycle was repeated until the discharge capacity was reduced to 80% of D0. The number of cycles that the battery had undergone at this moment was reported.

### 6. Determination of Lattice change rate

Under a constant temperature environment of 25°C, the above prepared positive electrode active material sample was placed in XRD (Bruker D8 Discover model) and tested at 1°/minute. The test data was organized and analyzed. Referring to the standard PDF card, the lattice constants a0, b0, c0, and v0 (a0, b0, and c0 represent the length size in individual directions of lattice cell, respectively, v0 represents the volume of lattice cell, which can be directly obtained through XRD refinement results) were calculated.

Using the preparation method of button battery, the positive electrode active material sample was prepared into a button battery. The button battery was charged at a small rate of 0.05C until the current was decreased to 0.01C. Then the positive electrode plate was taken out of the button battery and soaked in dimethyl carbonate (DMC) for 8 hours. After drying and scraping the powder, the particles with a particle size less than 500 nm were obtained by sieving. A sample was taken and its lattice volume v1 was calculated in the same way as the fresh sample was tested above. (v0-v1)/v0 ×100% representing the lattice change rate (lattice volume change rate) of before and after complete de-intercalation of lithium was shown in the table.

### 7. Determination of Li/Mn anti-site defect concentration

The XRD results measured in the "Measurement method for lattice change rate" were compared with the PDF (Powder Diffusion File) card of standard crystal to obtain the Li/Mn anti-site defect concentration. Specifically, the XRD results tested in the "Measurement method for lattice change rate" were imported into the General Structural Analysis System (GSAS) software to automatically obtain refined results, which include the occupancy of different atoms. The Li/Mn anti-site defect concentration was obtained by reading the refined results.

### 8. Determination of leaching-out of transition metal ions

At 45 °C, a full battery with the capacity reduced to 80% after circles was discharged to the cutoff voltage of 2.0 V at a rate of 0.1 C. Then the battery was disassembled, the negative electrode plate was taken out. 30 discs having a unit area (1540.25mm²) were randomly taken from the negative electrode plate. Inductively coupled plasma emission spectrum (ICP) was tested by using Agilent ICP-OES730. The amounts of Fe (if Fe was doped at Mn site of the positive electrode active material) and Mn were calculated on the basis of the ICP results, and then the amount of leaching-out of Mn (and Fe doped at Mn site) after cycle was calculated. The testing standard was based on EPA-6010D-2014.

### 9. Determination of surface oxygen valence

5g of the above prepared positive electrode active material samples each were taken and prepared into a button battery according to the preparation method of button battery. The button battery was charged at a low rate of 0.05C until the current decreased to 0.01C. Then the positive electrode plate was taken out of the button battery and soaked in dimethyl carbonate (DMC) for 8 hours. After drying and scraping powder, the particles with a particle size less than 500 nm were obtained by sieving. The obtained particles were measured with Electron Energy Loss Spectroscopy (EELS, Talos F200S model) to obtain the energy loss near edge structure (ELNES), which can reflect the state density and energy level distribution of elements. Based on the density of states and energy level distribution, the number of occupied electrons was calculated by integrating the density of states in valence band, thereby calculating the surface oxygen valence after charging.

### 10. Determination of compaction density

5g of the above prepared positive electrode active material powders each were taken and placed in a special mold for compaction (CARVER mold in the United States, model 13mm), and then the mold was placed on a compaction density instrument. 3T (tonnes) of pressure was applied and the thickness of powders under the pressure was read on the equipment (i.e. the thickness after the pressure was removed, the area of the container used for testing being 1540.25mm²). The compaction density was calculated via ρ= m/v.

11. X-ray diffraction method for testing the crystallinity of pyrophosphates and phosphates:
5g of the above prepared positive active material powders each were taken for the measurement of a total scattering intensity by X-ray, which was the sum of scattering intensity of substances in the whole space, and was only related to intensity of primary rays, chemical structure, and the total number of electrons participating in diffraction, i.e., how much the mass is, and had nothing to do with the ordinal state of samples. Then the scattering by crystalline portions and the scattering by amorphous portions in the diffractogram were separated, and the degree of crystallinity was a ratio of the intensity of the scattering by crystalline portions to the total intensity of scattering.

### 12. Crystal plane spacing and orientation angle:

1g of each of the above prepared positive electrode active material powders was placed in a 50mL test tube, to which 10mL of alcohol with 75% by mass was injected, and then it was subjected to sufficient stirring and dispersion for 30 minutes. Then an appropriate amount of the above solution was dropped on ta 300-mesh copper mesh with a clean disposable plastic pipette. At this time, some of the powder would be left on the copper mesh, and then the copper mesh with samples would be transferred to a TEM (Talo F200s G2) sample chamber for testing, thereby obtaining original images of TEM testing.

The above TEM images were opened in DigitalMicrograph software and subjected to Fourier transform (automatically done by the software after clicking the operation) to get a diffraction pattern, the distance from the diffracted spot to the center of diffraction pattern was measured to get a crystal plane spacing, and the orientation angle was calculated according to the Bragg's equation.

Table 1 shows the composition of the positive electrode active material in Examples 1-1 to 1-33 and Comparative Examples 1-8.

Table 2 shows the performance results measured by the above performance testing methods for the positive electrode active material, positive electrode plate, button battery or full battery of Examples 1-1 to 1-33 and Comparative Examples 1-8.

Table 3 shows the performance results measured by the above performance testing methods for the positive electrode active material, positive electrode plate, button battery or full battery of Examples 2-1 to 2-3.

**Table 1**

| No. | Core | First cladding layer | Second cladding layer | Third cladding layer |
|---|---|---|---|---|
| Example 1-1 | Li_{0.999}Mn_{0.60}Fe_{0.393}V_{0.004}Co_{0.003}P_{0.999}S_{0.0 01}O₄ | 1% Li₂FeP₂O₇/3% LiFePO₄ | 2% carbon | 1% |
| Example 1-2 | Li_{0.999}Mn_{0.60}Fe_{0.40}P_{0.999}S_{0.001}O₄ | 0.8% Li₂FeP₂O₇/2.4% LiFePO₄ | 1% carbon | 1% |
| Example 1-3 | Li_{0.999}Mn_{0.60}Fe_{0.40}P_{0.999}S_{0.001}O₄ | 1% Li₂FeP₂O₇/3% LiFePO₄ | 1% carbon | 1% |
| Example 1-4 | Li_{0.999}Mn_{0.60}Fe_{0.40}P_{0.999}S_{0.001}O₄ | 1.2% Li₂FeP₂O₇/3.6% LiFePO₄ | 1% carbon | 1% |
| Example 1-5 | Li_{0.999}Mn_{0.60}Fe_{0.40}P_{0.999}S_{0.001}O₄ | 1.4% Li₂FeP₂O₇/4.2% LiFePO₄ | 1% carbon | 1% |
| Example 1-6 | Li_{0.999}Mn_{0.60}Fe_{0.40}P_{0.999}S_{0.001}O₄ | 1.6% Li₂FeP₂O₇/4.8% LiFePO₄ | 1% carbon | 1% |
| Example 1-7 | Li_{0.999}Mn_{0.60}Fe_{0.40}P_{0.999}S_{0.001}O₄ | 1% Li₂FeP₂O₇/3% LiFePO₄ | 2% carbon | 1% |
| Example 1-8 | Li_{0.999}Mn_{0.60}Fe_{0.40}P_{0.999}S_{0.001}O₄ | 1% Li₂FeP₂O₇/3% LiFePO₄ | 4% carbon | 1% |
| Example 1-9 | Li_{0.999}Mn_{0.60}Fe_{0.40}P_{0.999}S_{0.001}O₄ | 1% Li₂FeP₂O₇/3% LiFePO₄ | 5% carbon | 1% |
| Example 1-10 | Li_{0.999}Mn_{0.60}Fe_{0.40}P_{0.999}S_{0.001}O₄ | 1% Li₂FeP₂O₇/3% LiFePO₄ | 6% carbon | 1% |
| Example 1-11 | Li_{0.999}Mn_{0.60}Fe_{0.40}P_{0.999}S_{0.001}O₄ | 1.5% Li₂FeP₂O₇/2.5% LiFePO₄ | 2% carbon | 1% |
| Example 1-12 | Li_{0.999}Mn_{0.60}Fe_{0.40}P_{0.999}S_{0.001}O₄ | 2% Li₂FeP₂O₇/2% LiFePO₄ | 2% carbon | 1% |
| Example 1-13 | Li_{0.999}Mn_{0.60}Fe_{0.40}P_{0.999}S_{0.001}O₄ | 2.5% Li₂FeP₂O₇/1.5% LiFePO₄ | 2% carbon | 1% |
| Example 1-14 | Li_{0.999}Mn_{0.60}Fe_{0.40}P_{0.999}S_{0.001}O₄ | 3% Li₂FeP₂O₇/1% LiFePO₄ | 2% carbon | 1% |
| Example 1-15 | Li_{0.999}Mn_{0.60}Zn_{0.40}P_{0.999}S_{0.001}O₄ | 3% Li₂FeP₂O₇/1% LiFePO₄ | 2% carbon | 1% |
| Example 1-16 | Li_{0.993}Mn_{0.6}Ni_{0.393}Zn_{0.004}Ti_{0.003}P_{0.999}S_{0.00 1}O₄ | 1% Li₂FeP₂O₇/3% LiFePO₄ | 2% carbon | 1% |
| Example 1-17 | Li_{0.999}Mn_{0.60}Fe_{0.393}V_{0.007}P_{0.999}S_{0.001}O₄ | 1% Li₂FeP₂O₇/3% LiFePO₄ | 2% carbon | 1% |
| Example 1-18 | Li_{0.999}Mn_{0.60}Fe_{0.393}V_{0.004}Mg_{0.003}P_{0.999}S_{0. 001}O₄ | 1% Li₂FeP₂O₇/3% LiFePO₄ | 2% carbon | 1% |
| Example 1-19 | LiMn_{0.60}Fe_{0.393}V_{0.004}Mg_{0.003}P_{0.999}N_{0.001} O₄ | 1% Li₂FeP₂O₇/3% LiFePO₄ | 2% carbon | 1% |
| Example 1-20 | Li_{1.001}Mn_{0.60}Fe_{0.393}V_{0.004}Mg_{0.003}P_{0.999}Si_{0. 00}O₄ | 1% Li₂FeP₂O₇/3% LiFePO₄ | 2% carbon | 1% |
| Example 1-21 | Li_{1.001}Mn_{0.55}Fe_{0.40}V_{0.025}Mg_{0.025}P_{0.999}Si_{0.0 01}O₄ | 1% Li₂FeP₂O₇/3% LiFePO₄ | 2% carbon | 1% |
| Example 1-22 | Li_{1.001}Mn_{0.65}Fe_{0.25}V_{0.05}Mg_{0.05}P_{0.999}Si_{0.001} O₄ | 1% Li₂FeP₂O₇/3% LiFePO₄ | 2% carbon | 1% |
| Example 1-23 | Li_{1.004}Mn_{0.7}Fe_{0.3}V_{0.05}Mg_{0.05}P_{0.998}B_{0.003}O ₄ | 1% Li₂FeP₂O₇/3% LiFePO₄ | 2% carbon | 1% |
| Example 1-24 | Li_{1.006}Mn_{0.75}Fe_{0.15}V_{0.05}Mg_{0.05}P_{0.997}B_{0.003} O₄ | 1% Li₂FeP₂O₇/3% LiFePO₄ | 2% carbon | 1% |
| Example 1-25 | Li_{1.002}Mn_{0.60}Fe_{0.393}V_{0.004}Mg_{0.003}P_{0.998}Si_{0. 002}O₄ | 1% Li₂FeP₂O₇/3% LiFePO₄ | 2% carbon | 1% |
| Example 1-26 | Li_{0.997}Mn_{0.80}Fe_{0.194}V_{0.003}Mg_{0.003}P_{0.997}S_{0. 003}O₄ | 1% Li₂FeP₂O₇/3% LiFePO₄ | 2% carbon | 1% |
| Example 1-27 | Li_{o.996}Mn_{0.60}Fe_{0.393}V_{0.004}Mg_{0.003}P_{0.996}S_{0. 004}O₄ | 1% Li₂FeP₂O₇/3% LiFePO₄ | 2% carbon | 1% |
| Example 1-28 | Li_{0.995}Mn_{0.9}Fe_{0.094}V_{0.003}Mg_{0.003}P_{0.995}S_{0.0 05}O₄ | 1% Li₂FeP₂O₇/3% LiFePO₄ | 2% carbon | 1% |
| Example 1-29 | Li_{0.994}Mn_{0.90}Fe_{0.094}V_{0.003}Mg_{0.003}P_{0.994}S_{0. 006}O₄ | 1% Li₂FeP₂O₇/3% LiFePO₄ | 2% carbon | 1% |
| Example 1-30 | Li_{0.993}Mn_{0.90}Fe_{0.094}V_{0.003}Mg_{0.003}P_{0.993}S_{0. 007}O₄ | 1% Li₂FeP₂O₇/3% LiFePO₄ | 2% carbon | 1% |
| Example 1-31 | Li_{0.993}Mn_{0.90}Fe_{0.094}V_{0.003}Mg_{0.003}P_{0.993}S_{0. 008}O₄ | 1% Li₂FeP₂O₇/3% LiFePO₄ | 2% carbon | 1% |
| Example 1-32 | Li_{0.991}Mn_{0.90}Fe_{0.09}4V_{0.003}Mg_{0.003}P_{0.991}S_{0. 009}O₄ | 1% Li₂FeP₂O₇/3% LiFePO₄ | 2% carbon | 1% |
| Example 1-33 | Li_{0.9}Mn_{0.90}Fe_{0.094}V_{0.003}Mg_{0.003}P_{0.9}S_{0.1}O₄ | 1% Li₂FeP₂O₇/3% LiFePO₄ | 2% carbon | 1% |
| Comparative Example 1 | LiMnPO₄ | - | 1% carbon | / |
| Comparative Example 2 | LiMn_{0.6o}Fe_{0.40}PO₄ | - | 1% carbon | / |
| Comparative Example 3 | Li_{0.999}MnP_{0.999}S_{0.001}O₄ | - | 1% carbon | / |
| Comparative Example 4 | Li_{0.999}Mn_{0.60}Fe_{0.40}P_{0.999}S_{0.001}O₄ | - | 1% carbon | / |
| Comparative Example 5 | Li_{0.999}Mn_{0.60}Fe_{0.40}P_{0.999}S_{0.001}O₄ | 4% amorphous Li₂FeP₂O₇ | 1% carbon | / |
| Comparative Example 6 | Li_{0.999}Mn_{0.60}Fe_{0.40}P_{0.999}S_{0.001}O₄ | 4% amorphous LiFePO₄ | 1% carbon | / |
| Comparative | Li_{0.999}Mn_{0.60}Fe_{0.40}P_{0.999}S_{0.001}O₄ | 1% amorphous | 1% carbon | / |
| Example 7 | | Li₂FeP₂O₇+3% amorphous LiFePO₄ | | |
| Comparative Example 8 | Li_{0.999}Mn_{0.60}Fe_{0.393}V_{0.004}Co_{0.003}P_{0.999}S_{0.0 01}O₄ | 1% Li₂FeP₂O₇/3% LiFePO₄ | 2% carbon | / |
| Note: 1) In Examples 1-1 to 1-33, both Li₂FeP₂O₇ and LiFePO₄ have a crystalline of 100%; 2) In Comparative Example 5-7, amorphous Li₂FeP₂O₇ has a crystalline of 5% and amorphous LiFePO₄ has a crystalline of 8%; and 3) In Examples 1-1 to 1-33, the material of the third cladding layer is carboxymethyl chitosan. | | | | |

**Table 2**

| No. | Lattice change rate (%) | Li/Mn anti-site defect concentr ation (%) | Compacti on density (g/cm³) | Surface oxygen valence | Leaching-out of Mn and Fe after cycling (ppm) | 0.1C specific capacity of button battery (mAh/g) | Average discharge voltage of button battery (V) | Expansion rate of battery stored at 60°C for 30 days (%) | Number of cycles at capacity retention of 80% @45°C |
|---|---|---|---|---|---|---|---|---|---|
| Example 1-1 | 2.30 | 0.40 | 2.41 | -1.98 | 2 | 158.10 | 3.78 | 1.90 | 1799 |
| Example 1-2 | 6.60 | 1.20 | 2.43 | -1.97 | 31 | 148.90 | 3.75 | 6.40 | 1253 |
| Example 1-3 | 6.50 | 1.10 | 2.45 | -1.97 | 22 | 148.50 | 3.74 | 5.30 | 1360 |
| Example 1-4 | 6.50 | 0.80 | 2.44 | -1.97 | 16 | 147.30 | 3.73 | 4.80 | 1410 |
| Example 1-5 | 6.50 | 0.70 | 2.45 | -1.98 | 12 | 146.80 | 3.73 | 3.60 | 1514 |
| Example 1-6 | 6.60 | 0.60 | 2.45 | -1.98 | 9 | 145.90 | 3.72 | 2.80 | 1600 |
| Example 1-7 | 6.50 | 1.00 | 2.46 | -1.97 | 20 | 147.50 | 3.73 | 4.80 | 1413 |
| Example 1-8 | 6.50 | 1.00 | 2.47 | -1.97 | 14 | 146.40 | 3.73 | 4.30 | 1462 |
| Example 1-9 | 6.40 | 1.10 | 2.44 | -1.98 | 14 | 144.30 | 3.73 | 3.70 | 1558 |
| Example 1-10 | 6.40 | 1.10 | 2.41 | -1.98 | 9 | 142.10 | 3.73 | 2.80 | 1612 |
| Example 1-11 | 6.50 | 1.10 | 2.44 | -1.97 | 13 | 147.80 | 3.74 | 5.20 | 1377 |
| Example 1-12 | 6.60 | 1.00 | 2.47 | -1.96 | 10 | 147.60 | 3.74 | 6.10 | 1347 |
| Example 1-13 | 6.70 | 1.20 | 2.46 | -1.96 | 10 | 147.20 | 3.74 | 6.90 | 1260 |
| Example 1-14 | 6.70 | 1.10 | 2.45 | -1.97 | 4 | 147.00 | 3.75 | 7.50 | 1216 |
| Example 1-15 | 7.50 | 2.50 | 2.45 | -1.97 | 9 | 138.70 | 3.86 | 8.40 | 1307 |
| Example 1-16 | 5.40 | 0.80 | 2.44 | -1.97 | 8 | 139.40 | 3.86 | 4.50 | 140 |
| Example 1-17 | 4.20 | 0.60 | 2.45 | -1.97 | 6 | 153.20 | 3.78 | 3.20 | 1691 |
| Example 1-18 | 2.60 | 0.50 | 2.45 | -1.97 | 4 | 155.60 | 3.80 | 2.70 | 1695 |
| Example 1-19 | 2.30 | 0.50 | 2.45 | -1.98 | 5 | 157.60 | 3.80 | 2.10 | 1799 |
| Example 1-20 | 2.40 | 0.70 | 2.44 | -1.98 | 6 | 157.40 | 3.80 | 2.40 | 1818 |
| Example 1-21 | 2.20 | 0.50 | 2.43 | -1.98 | 2 | 158.40 | 3.72 | 2.00 | 1899 |
| Example 1-22 | 2.50 | 0.80 | 2.42 | -1.98 | 8 | 156.90 | 3.83 | 2.80 | 1733 |
| Example 1-23 | 2.60 | 0.80 | 2.43 | -1.98 | 5 | 157.10 | 3.83 | 2.50 | 1718 |
| Example 1-24 | 2.60 | 0.80 | 2.44 | -1.98 | 3 | 157.40 | 3.83 | 2.60 | 1745 |
| Example 1-25 | 2.30 | 0.70 | 2.45 | -1.98 | 5 | 157.30 | 3.78 | 2.40 | 1808 |
| Example 1-26 | 2.80 | 0.90 | 2.45 | -1.98 | 3 | 156.10 | 3.85 | 2.90 | 1578 |
| Example 1-27 | 2.20 | 0.60 | 2.46 | -1.98 | 6 | 157.50 | 3.78 | 2.40 | 1807 |
| Example 1-28 | 3.20 | 1.10 | 2.45 | -1.96 | 5 | 156.80 | 3.89 | 3.20 | 1539 |
| Example 1-29 | 3.00 | 1.20 | 2.44 | -1.95 | 7 | 156.10 | 3.89 | 3.20 | 1488 |
| Example 1-30 | 2.80 | 1.40 | 2.45 | -1.95 | 9 | 155.80 | 3.89 | 3.10 | 1388 |
| Example 1-31 | 2.60 | 1.40 | 2.44 | -1.94 | 11 | 155.40 | 3.89 | 3.00 | 1367 |
| Example 1-32 | 2.40 | 1.20 | 2.45 | -1.94 | 10 | 154.80 | 3.89 | 2.80 | 1347 |
| Example 1-33 | 2.10 | 0.90 | 2.44 | -1.94 | 9 | 154.50 | 3.89 | 2.70 | 1329 |
| Comparative Example 1 | 11.40 | 3.20 | 1.81 | -1.55 | 2060 | 125.60 | 4.02 | 48.60 | 185 |
| Comparative Example 2 | 8.70 | 2.80 | 1.92 | -1.76 | 1597 | 134.80 | 3.76 | 42.50 | 358 |
| Comparative Example 3 | 9.80 | 2.50 | 1.88 | -1.66 | 1895 | 128.60 | 4.05 | 45.50 | 267 |
| Comparative Example 4 | 6.70 | 1.80 | 1.82 | -1.83 | 1279 | 140.50 | 3.78 | 38.50 | 417 |
| Comparative Example 5 | 6.50 | 1.80 | 1.79 | -1.90 | 208 | 140.30 | 3.73 | 12.50 | 519 |
| Comparative Example 6 | 6.60 | 1.80 | 1.83 | -1.91 | 318 | 140.20 | 3.74 | 11.50 | 528 |
| Comparative Example 7 | 6.60 | 1.80 | 1.84 | -1.90 | 174 | 140.10 | 3.75 | 8.60 | 682 |
| Comparative Example 8 | 2.40 | 0.40 | 2.41 | -1.98 | 8 | 158.20 | 3.78 | 1.90 | 1328 |

**Table 3**

| No. | Crystalliniti es of pyrophosph ate and phosphate | Lattic e chang e rate (%) | Li/Mn anti-site defect concentrati on (%) | Compacti on density (g/cm³) | Surfac e oxyge n valenc e | Leaching-out of Mn and Fe after cycling (ppm) | 0.1C specific capacity of button battery (mAh/g) | Averag e dischar ge voltage of button battery (V) | Expansio n rate of battery stored at 60°C for 30 days (%) | Number of cycles at capacity retention of 80% @45°C |
|---|---|---|---|---|---|---|---|---|---|---|
| Example 1-1 | 100% | 2.30 | 0.40 | 2.41 | -1.98 | 2 | 158.10 | 3.78 | 1.90 | 1799 |
| Example 2-1 | 30% | 6.30 | 1.90 | 2.10 | -1.88 | 63 | 145.20 | 3.72 | 5.60 | 1139 |
| Example 2-2 | 50% | 4.70 | 1.20 | 2.25 | -1.89 | 25 | 149.20 | 3.74 | 4.70 | 1302 |
| Example 2-3 | 70% | 3.50 | 0.80 | 2.33 | -1.91 | 11 | 151.30 | 3.75 | 3.80 | 1457 |

As can be seen from the combination of Examples 1-1 to 1-33 and Comparative Examples 1 to 8, the presence of the first cladding layer is favorable to reducing the Li/Mn anti-site defect concentration and the leaching-out of Fe and Mn after cycling of the resulting material, increasing the specific capacity of batteries, and improving the safety performance and the cycle performance of batteries. When other elements are doped at the Mn site and the phosphorus site, respectively, the lattice change rate, the anti-site defect concentration, and the leaching-out of Fe and Mn in the resulting material can be significantly reduced, the specific capacity of batteries can be increased, and the safety performance and cycle performance of batteries can be improved. The presence of the third cladding layer can further alleviate the erosion of the surface of the positive electrode active material caused by an electrolytic solution, reduce the leaching-out of Fe and Mn after cycling, and significantly improve the cycling performance of batteries.

As can be seen from the combination of Examples 1-2 to 1-6, as the amount of the first cladding layer is increased from 3.2% to 6.4%, the Li/Mn anti-site defect concentration of the resulting material can be gradually decreased, and the leacing out of Fe and Mn after cycling can be gradually decreased, corresponding to the improvement of the safety performance and the cycle performance of batteries at 45° C, with a slight decrease in the specific capacity. Optionally, when the total amount of the first cladding layer is from 4 wt% to 5.6 wt%, the comprehensive performance of the corresponding battery is optimal.

As can be seen from the combination of Example 1-3 and Examples 1-7 to 1-10, as the amount of the second cladding layer is increased from 1% to 6%, the leaching-out of Fe and Mn in the resulting material after cycling is greadually decreased, corresponding to the improvement of the safety performance and the cycle performance of batteries at 45° C, with a slight decrease in the specific capacity. Optionally, when the total amount of the second cladding layer is from 3 wt% to 5.6 wt%, the comprehensive performance of the corresponding battery is optimal.

As can be seen from the combination of Examples 1-11 to 1-15 and the Comparative Examples 5 to 6, the improvement of battery performances is more pronounced when both Li₂FeP₂O₇ and LiFePO₄ are present in the first cladding layer, and in particular when a weight ratio of Li₂FeP₂O₇ and LiFePO₄ is from 1:3 to 3:1 and especially when a weight ratio of Li₂FeP₂O₇ and LiFePO₄ is from 1:3 to 1: 1.

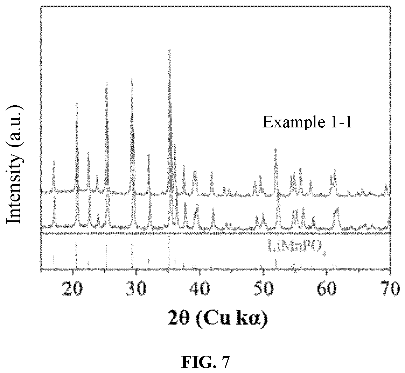

Fig. 7 is a comparison of an XRD spectrum of the core of the positive active materials prepared in Example 1-1 with the XRD standard spectrum (00-033-0804) of lithium manganese phosphate. As shown in Fig. 7, the core of the positive electrode active material of the present application has basically the same primary characteristic peak positions as undoped LiMnPO₄, indicating that the core of the positive electrode active material of the present application has no impurity phase and the improvement in performance of secondary batteries is mainly caused by the doping elements instead of an impurity phase.

As can be seen from Table 3, with the gradual increase in crystallinity of pyrophosphate salts and phosphate salts in the first cladding layer, the lattice change rate, Li/Mn anti-site defect concentration, and leaching-out of Fe and Mn of the corresponding materials are gradually decreased, and the specific capacity of batteries is gradually increased, and the safety performance and cycle performance are also gradually improved.

Table 4 shows the composition of the third cladding layer in the positive electrode active material of Examples 3-1 to 3-22.

Table 5 shows the performance results measured by the above performance testing methods for the positive electrode active material, positive electrode plate, button battery or full battery of Examples 3-1 to 3-22.

**Table 4**

| No. | Third cladding layer | | | |
|---|---|---|---|---|
| | Polymer | Amount α of substituent attached to the sugar unit | Number average molecular weight | Cladding amount |
| Example 1-1 | Carboxymethyl chitosan | 60.2% | 26000 | 1% |
| Example 3-1 | Hydroxyethyl cellulose | 45.9% | 59800 | 1% |
| Example 3-2 | Carboxymethyl cellulose | 53.3% | 90000 | 1% |
| Example 3-3 | Guar gum | 38.0% | 30400 | 1% |
| Example 3-4 | Hydroxypropyl starch | 40.8% | 47300 | 1% |
| Example 3-5 | Sodium alginate | 44.0% | 18000 | 1% |
| Example 3-6 | Fucoidan | 42.4% | 23000 | 1% |
| Example 3-7 | Agar | 39.0% | 26800 | 1% |
| Example 3-8 | Carrageenan | 62.3% | 32000 | 1% |
| Example 3-9 | Carboxymethyl chitosan | 15.0% | 112000 | 1% |
| Example 3-10 | Carboxymethyl chitosan | 90.0% | 76400 | 1% |
| Example 3-11 | Carboxymethyl chitosan | 60.2% | 26000 | 0.1% |
| Example 3-12 | Carboxymethyl chitosan | 60.2% | 26000 | 2% |
| Example 3-13 | Carboxymethyl chitosan | 60.2% | 26000 | 5% |
| Example 3-14 | Carboxymethyl chitosan | 60.2% | 26000 | 10% |
| Example 3-15 | Carboxymethyl chitosan | 60.2% | 26000 | 12% |
| Example 3-16 | Carboxymethyl chitosan | 61.3% | 10000 | 1% |
| Example 3-17 | Carboxymethyl chitosan | 60.8% | 20000 | 1% |
| Example 3-18 | Carboxymethyl chitosan | 58.2% | 50000 | 1% |
| Example 3-19 | Carboxymethyl chitosan | 56.8% | 80000 | 1% |
| Example 3-20 | Carboxymethyl chitosan | 55.7% | 120000 | 1% |
| Example 3-21 | Carboxymethyl chitosan | 55.1% | 200000 | 1% |
| Example 3-22 | Carboxymethyl chitosan | 54.9% | 300000 | 1% |

**Table 5**

| No. | Lattice change rate(%) | Li/Mn anti-site defect concentration (%) | Compaction density (g/cm³) | Surface oxygen valence | Leaching-out of Mn and Fe after cycling (ppm) | 0.1C specific capacity of button battery (mAh/g) | Average discharge voltage of button battery (V) | Expansion rate of battery stored at 60°C for 30 days (%) | Number of cycles at capacity retention of 80% @45°C |
|---|---|---|---|---|---|---|---|---|---|
| Example 1-1 | 2.30 | 0.40 | 2.41 | -1.98 | 2 | 158.10 | 3.78 | 1.90 | 1799 |
| Example 3-1 | 2.40 | 0.40 | 2.40 | -1.98 | 3 | 158.00 | 3.78 | 1.90 | 1658 |
| Example 3-2 | 2.30 | 0.30 | 2.41 | -1.98 | 3 | 158.10 | 3.78 | 1.90 | 1672 |
| Example 3-3 | 2.30 | 0.40 | 2.42 | -1.98 | 4 | 158.20 | 3.78 | 1.91 | 1660 |
| Example 3-4 | 2.40 | 0.50 | 2.42 | -1.98 | 2 | 158.10 | 3.78 | 1.91 | 1688 |
| Example 3-5 | 2.40 | 0.40 | 2.41 | -1.98 | 3 | 158.10 | 3.78 | 1.90 | 1692 |
| Example 3-6 | 2.50 | 0.30 | 2.41 | -1.98 | 3 | 158.30 | 3.78 | 1.90 | 1718 |
| Example 3-7 | 2.40 | 0.40 | 2.40 | -1.98 | 3 | 158.20 | 3.78 | 1.91 | 1655 |
| Example 3-8 | 2.40 | 0.40 | 2.41 | -1.98 | 4 | 158.10 | 3.78 | 1.91 | 1659 |
| Example 3-9 | 2.30 | 0.50 | 2.42 | -1.98 | 2 | 158.20 | 3.78 | 1.90 | 1501 |
| Example 3-10 | 2.30 | 0.40 | 2.41 | -1.98 | 5 | 158.10 | 3.78 | 1.91 | 1422 |
| Example 3-11 | 2.30 | 0.40 | 2.42 | -1.98 | 3 | 158.20 | 3.78 | 1.90 | 1466 |
| Example 3-12 | 2.40 | 0.40 | 2.40 | -1.98 | 3 | 158.10 | 3.78 | 1.91 | 1781 |
| Example 3-13 | 2.30 | 0.40 | 2.41 | -1.98 | 3 | 157.80 | 3.78 | 1.91 | 1753 |
| Example 3-14 | 2.30 | 0.50 | 2.42 | -1.98 | 2 | 156.90 | 3.78 | 1.90 | 1721 |
| Example 3-15 | 2.40 | 0.40 | 2.41 | -1.98 | 3 | 155.30 | 3.78 | 1.90 | 1689 |
| Example 3-16 | 2.30 | 0.40 | 2.41 | -1.98 | 3 | 158.20 | 3.78 | 1.90 | 1775 |
| Example 3-17 | 2.30 | 0.50 | 2.41 | -1.98 | 2 | 158.10 | 3.78 | 1.90 | 1789 |
| Example 3-18 | 2.40 | 0.40 | 2.40 | -1.98 | 3 | 158.10 | 3.78 | 1.91 | 1778 |
| Example 3-19 | 2.30 | 0.40 | 2.42 | -1.98 | 3 | 158.00 | 3.78 | 1.91 | 1761 |
| Example 3-20 | 2.40 | 0.50 | 2.42 | -1.98 | 2 | 157.80 | 3.78 | 1.90 | 1731 |
| Example 3-21 | 2.40 | 0.40 | 2.41 | -1.98 | 3 | 157.00 | 3.78 | 1.90 | 1702 |
| Example 3-22 | 2.40 | 0.50 | 2.41 | -1.98 | 2 | 156.40 | 3.78 | 1.91 | 1698 |

As can be seen from Table 5, in the case where other elements are the same, selecting polysaccharides and derivatives thereof with one or more of suitable amount of substituent attached to the sugar unit, number average molecular weight, and cladding amount as the third cladding layer is capable of further improving the safety performance and cycling performance of batteries without affecting their energy density and rate performance.

It should be noted that this application is not limited to the above embodiments. The above embodiments are only provided as examples, and within the technical solution of the present application, embodiments having substantially the same configuration as the technical idea and achieving the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

## Claims

1. A positive electrode active material having a core-shell structure, comprising a core and a shell cladding the core,
wherein the core comprises Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S;
the shell comprises a first cladding layer cladding the core, a second cladding layer cladding the first cladding layer and a third cladding layer cladding the second cladding layer,
wherein the first cladding layer comprises pyrophosphate MP₂O₇ and phosphate XPO₄; wherein M and X are each independently selected from one or more of Li, Fe, Ni, Mg, Co, Cu, Zn, Ti, Ag, Zr, Nb and Al;
the second cladding layer comprises carbon; and
the third cladding layer comprises a polymer comprising one or more of plant polysaccharides, marine polysaccharides, and the derivatives thereof.

2. The positive electrode active material according to claim 1, wherein the substituent attached to the sugar unit in the polymer comprises at least one of the group selected from the following functional groups: -OH, -COOH and the salts thereof, -R-OH, -SO₃H and the salts thereof, -R-OH, -R-SO₃H and the salts thereof, sulphate group, alkoxy group, and R represents alkylene, optionally, C1-C5 alkylene;
optionally, the substituent attached to the sugar unit in the polymer comprises at least one of the group selected from the following functional groups: -OH, -COOH, -COOLi, -COONa, - COOK, -SO₃H, -SO₃Li, -SO₃Na, -SO₃K, -CH₂-SO₃H, -CH₂-SO₃Li, -CH₂-SO₃Na, -CH₂-SO₃K, methoxy, and ethoxy.

3. The positive electrode active material according to claim 1 or 2, wherein the plant polysaccharide comprises one or more selected from pectin, carboxymethyl starch, hydroxypropyl starch, dextrin, cellulose ether, carboxymethyl chitosan, hydroxyethyl cellulose, carboxymethyl cellulose, carboxypropylmethyl cellulose, guar gum, sesbania gum, gum arabic, and the modified polymers thereof; and
the marine polysaccharide comprises one or more selected from lithium alginate, sodium alginate, potassium alginate, fucoidan, agar, carrageenan, carrageenin, xanthan gum, fenugreek gum and the modified polymers thereof.

4. The positive electrode active material according to any one of claims 1 to 3, wherein the polymer has a number average molecular weight of 10,000 to 200,000, optionally of 18,000 to 120,000.

5. The positive electrode active material according to any one of claims 1 to 4, wherein the substituent attached to the sugar unit is present in a mass percentage α in the polymer, with α being from 20% to 85%, optionally from 30% to 78%.

6. The positive electrode active material according to any one of claims 1 to 5, wherein
the first cladding layer has a cladding amount of greater that 0 wt% and less than or equal to 7 wt%, optionally 4 wt% to 5.6 wt%, based on the weight of the core; and/or
the second cladding layer has a cladding amount of greater that 0 wt% and less than or equal to 6 wt%, optionally 3 wt% to 5 wt%, based on the weight of the core; and/or
the third cladding layer has a cladding amount of 0.05 wt% to 10 wt%, more optionally 0.1 wt% to 5 wt%, based on the weight of the core.

7. The positive electrode active material according to any one of claims 1 to 6, wherein the third cladding layer is located at 40% to 90%, optionally 60% to 80% of the surface of the second cladding layer.

8. The positive electrode active material according to any one of claims 1 to 7, wherein
in the core, the ratio of y:(1-y) is 1:10 to 10:1, optionally 1:4 to 1:1; and/or,
in the core, the ratio of z:(1-z) is 1:9 to 1:999, optionally 1:499 to 1:249.

9. The positive electrode active material according to any one of claims 1 to 8, wherein
A is selected from at least two of Fe, Ti, V, Ni, Co and Mg.

10. The positive electrode active material according to any one of claims 1 to 9, wherein the first cladding layer satisfies at least one of the following (1) to (4):
(1) the phosphate in the first cladding layer has an interplanar spacing ranging from 0.345 nm to 0.358 nm, and a crystal orientation (111) angle ranging from 24.25° to 26.45°;
(2) the pyrophosphate in the first cladding layer has an interplanar spacing ranging from 0.293 nm to 0.326 nm, and a crystal orientation (111) angle ranging from 26.41° to 32.57°;
(3) a weight ratio of pyrophosphate to phosphate in the first cladding layer is 1:3 to 3:1, optionally 1:3 to 1:1;
(4) crystallinities of pyrophosphate and phosphate are each independently ranging from 10% to 100%, optionally from 50% to 100%.

11. The positive electrode active material according to any one of claims 1 to 10, wherein the positive electrode active material satisfies at least one of the following (1) to (4):
(1) the positive electrode active material has a Li/Mn anti-site defect concentration of 4% or less, optionally 2% or less;
(2) the positive electrode active material has a lattice change rate of 6% or less, optionally 4% or less;
(3) the positive electrode active material has a surface oxygen valence of -1.88 or less, optionally -1.98 to -1.88;
(4) the positive electrode active material has a compaction density of 2.0 g/cm³ or more, optionally 2.2 g/cm³ or more, at 3 Tons.

12. A method for preparing a positive electrode active material, comprising the following steps:
step of providing a core material comprising Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S;
step of cladding: providing MP₂O₇ power and XPO₄ suspension containing a carbon source, adding the core material and MP₂O₇ power to the suspension containing a carbon source and mixing them, obtaining a core having a first cladding layer and a second cladding layer by sintering, mixing the obtained core having a first cladding layer and a second cladding layer with a polymer solution evenly, and obtaining the positive electrode active material by drying, wherein M and X are each independently selected from one or more of Li, Fe, Ni, Mg, Co, Cu, Zn, Ti, Ag, Zr, Nb and Al; the polymer comprises one or more of plant polysaccharides, marine polysaccharides, and the derivatives thereof;
wherein, the positive electrode active material has a core-shell structure comprising the core and a shell cladding the core, wherein the shell comprises a first cladding layer cladding the core, a second cladding layer cladding the first cladding layer and a third cladding layer cladding the second cladding layer, wherein the first cladding layer comprises pyrophosphate MP₂O₇ and phosphate XPO₄, the second cladding layer comprises carbon, and the third cladding layer comprises a polymer comprising one or more of plant polysaccharides, marine polysaccharides, and the derivatives thereof.

13. The method according to claim 12, wherein the step of providing a core material comprises:
step (1), mixing a manganese source, a source of element A and an acid in a solvent and stirring to obtain particles of a manganese salt doped with element A; and
step (2), mixing the particles of a manganese salt doped with element A, a lithium source, a phosphorus source, and a source of element R in a solvent to obtain a slurry, sintering under the protection of an inert gas atmosphere to obtain lithium manganese phosphate doped with elements A and R, wherein the lithium manganese phosphate doped with elements A and R has a chemical formula of Li₁₊ₓMn_{1-y}A_{y}P_{1-z}R_{z}O₄, in which x is -0.100 to 0.100, y is 0.001 to 0.500, z is 0.001 to 0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S.

14. The method according to claim 13, wherein
the step (1) is carried out at a temperature in a range of 20-120°C, optionally 25-80°C, and/or
the stirring in the step (1) is carried out at 500-700 rpm for 60-420 minutes, optionally 120-360 minutes.

15. The method according to claim 13 or 14, wherein
the source of element A is selected from one or more of elemental substance, sulfates, halides, nitrates, salts of organic acid, oxides or hydroxides of element A; and/or
the source of element R is selected from one or more of elemental substance, sulfates, halides, nitrates, salts of organic acid, oxides or hydroxides, and inorganic acids of element R.

16. The method according to any one of claims 12 to 15, wherein the MP₂O₇ power is prepared by steps of:
adding a source of element M and a phosphorus source to a solvent to obtain a mixture, adjusting pH of the mixture to be 4 to 6, stirring and fully reacting, and drying and sintering, to obtain MP₂O₇ power, wherein M is elected from one or more of Li, Fe, Ni, Mg, Co, Cu, Zn, Ti, Ag, Zr, Nb and Al.

17. The method according to claim 16, wherein
the drying step is carried out at 100-300 °C, optionally 150-200 °C for 4-8 hours; and/or,
the sintering step is carried out at 500-800 °C, optionally 650-800 °C under an inert gas atmosphere for 4-10 hours; and/or,
the sintering temperature for obtaining the core with the first and second cladding layers in the cladding step is 500-800 °C and the sintering time is 4-10 hours.

18. A positive electrode plate comprising a positive electrode current collector and a positive electrode film layer provided on at least one surface of the positive electrode current collector, wherein the positive electrode film layer comprises the positive electrode active material according to any one of claims 1 to 11 or the positive electrode active material prepared by the method according to any one of claims 12 to 17, and the positive electrode active material is present in the positive electrode film layer in a content of 10 wt% or more, optionally 90 wt% to 99.5 wt%, based on total weight of the positive electrode film layer.

19. A secondary battery comprising the positive electrode active material according to any one of claims 1 to 11, or the positive electrode active material prepared by the method according to any one of claims 12 to 17, or the positive electrode plate according to claim 18.

20. An electrical device comprising the secondary battery according to claim 19.
